# EUROPEAN PATENT SPECIFICATION

(11) **EP 3 751 543 B1**
(45) Date of publication and mention of the grant of the patent: **27.05.2026**
(21) Application number: 20020276.0
(22) Date of filing: 11.06.2020
(51) Int. Cl.: G09B 9/04, G09B 9/12

(54) **MOTION SYSTEM**
BEWEGUNGSSYSTEM
SYSTÈME DE MOUVEMENTS

(30) Priority: 11.06.2019 GB 201908351
(43) Date of publication of application: 16.12.2020
(73) Proprietor: DYNISMA LTD., Barrow Gurney, Bristol BS48 3RE (GB)
(72) Inventor: Warne, Ashley William Hawker, Paulton, Bristol BS39 7SX (GB); Bell, Matthew Peter, Paulton, Bristol BS39 7SX (GB); Ward, Daniel Charmbury, Paulton, Bristol BS39 7SX (GB); Dean, John Paul, Paulton, Bristol BS39 7SX (GB)
(74) Representative: Maidment, Marc

(56) References cited:
- EP-A2- 1 096 461
- WO-A1-2014/114409
- PARK SANG A ET AL: "Multi-degree of freedom platform based on spherical wheels", 2015 IEEE INTERNATIONAL CONFERENCE ON ADVANCED INTELLIGENT MECHATRONICS (AIM), IEEE, 7 July 2015 (2015-07-07), pages 1061 - 1065, XP033210645, DOI: 10.1109/AIM.2015.7222680
- YUICHISHIGA ET AL: "DesignofaSixDegree-of-FreedomTripodParallelMechanism forFlightSimulators DesignofaSixDegree-of-FreedomTripodParallelMechanism forFlightSimulators", 1 January 2011 (2011-01-01), XP055228347, Retrieved from the Internet <URL:http://www.researchgate.net/profile/Yutaka_Tanaka5/publication/270219700_Design_of_Six_Degree-of-freedom_Tripod_Parallel_Mechanism_for_Flight_Simulator/links/54a360480cf257a63604e119.pdf>
- YOGESH SINGH ET AL: "Inverse Kinematic Solution of a 6-DOF(3-RPRS) Parallel Spatial Manipulator View project Development and Control of Foot-plate based Mechanisms for Lower Limb Rehabilitation Therapies and Gait Training View project Inverse Kinematic Solution of a 6-DOF(3-RPRS) Parallel Spatial Manipulator", 31 March 2014 (2014-03-31), XP055715350, Retrieved from the Internet <URL:https://www.researchgate.net/publication/261177949_Inverse_Kinematic_Solution_of_a_6-DOF3-RPRS_Parallel_Spatial_Manipulator> [retrieved on 20200716]

## Description

### Field of Invention

This invention relates to the field of motion systems. In particular, though not exclusively, the invention relates to motion generators, and to motion systems including such motion generators such as vehicle driving simulators, and to methods of using motion generators and motion systems, as well as to methods of their production.

### Background

A motion generator is a device capable of applying movements, forces and accelerations to a payload in one or more directions of degrees of freedom. The payload can be, for example, a human undergoing a simulated experience in a motion simulator. Alternatively, the payload may also be a further motion generator which is said to be in series with the first. One example of a primary motion generator having a payload comprising a further motion generator is given in EP2810268 A1 which discloses a three degree of freedom motion generator in series with a six degrees of freedom motion generator which can sustain large movements in the horizontal plane using the primary motion generator, whilst simultaneously achieving the maximum vertical travel of the secondary motion generator. Motion generators are used in motion systems. Motion systems comprise at least one motion generator and at least one control system for controlling the motion generator. Motion generators and motion systems are used in a variety of applications, including motion simulation (for example, flight simulators, driving simulators), robotics, 3D printing, vibration and seismic simulation. The most common type of motion generator currently used in motion simulation is the Stewart platform (or "hexapod"). This is a type of parallel robot that has six actuators, attached in pairs to three configurations on the baseplate of a platform and crossing over to three mounting points on a top plate. Devices or payloads such as a human user placed on the top plate, usually in some form of cockpit, chassis driver area, or model vehicle, can be moved in the six degrees of freedom in which it is possible for a freely-suspended body to move, i.e. the three linear movements x, y, z (lateral, longitudinal and vertical), and the three rotations (pitch, roll and yaw). A motion simulator is a mechanism that can create, for an occupant, the effects or feelings of being in a moving vehicle. Motion simulators are used, professionally, for training drivers and pilots in the form of driving simulators and flight simulators respectively. They also are used, industrially, in the creation, design, and testing of the vehicles themselves. Professional motion simulators used for driving and flying simulators typically synchronise a visual display - provided for example by a projection system and associated display screens and audio signals with the movement of a carriage (or chassis) occupied by the driver or pilot in order to provide a better sensation of the effect of moving. The advent of virtual reality (VR) head-mounted displays (HMDs) makes the aspect of an immersive simulation less costly with current motion systems and has the ability to deliver virtual reality applications to leisure uses such as in passive amusement park or arcade driving, riding-first-person, or flying rides and in active gaming, where one or more players has some control over the driving, riding, flying or first-person game experience. The type of hexapod-based motion systems typically used for motion simulation for human participants typically have a relatively low bandwidth of up to about 20Hz. This means that they can create oscillatory movements and vibrations of a consistent amplitude, with a frequency of up to 20 times per second, beyond which the amplitude of the movements reduces as the frequency increases. This is sufficient for replicating most car suspension movements, but it does not transmit the frequency content associated with vibrations from the car engine, tyre vibrations, road noise, and the sharp-edged kerbs on racetracks. A low bandwidth also means the signals are delayed, meaning that the driver cannot respond as quickly. One example of a hexapod-based driving simulator is known from WO2014/114409 A1.

Current motion simulation systems, especially those intended for high-end use such as in military and commercial flight instruction and training applications, are typically very large, heavy, complex, and very expensive. Their complexity necessitates extensive programming and maintenance, further extending the cost to users. Dedicated vehicle driving simulator motion systems have been developed by the likes of McLaren/MTS Williams/ABD and Ansible, but these tend to be extremely mechanically complex, and therefore expensive, featuring precision machined custom components and often expensive linear motors. These dedicated vehicle driving simulator motion systems are more responsive than hexapods when moving in some directions but are still limited in others. The use of ball screws in such systems is disadvantageous in that, whilst good at establishing position, they inhibit force transfer and can only achieve a lower bandwidth. This results in a less natural experience for a human user.

A further disadvantage of hexapod-based motion generators is that they lack an ability to rotate about a vertical axis beyond about 25° in either direction of rotation from a nominal position. One attempt at providing more rotation about a vertical axis is disclosed in EP3344352 A1, in which a motion generator having a carriage with cables operated by respective cable drives wound round the carriage in alternate directions whereby the carriage can rotate through at least 90° by operation of the cable drives. One attempt at introducing rotation into a hexapod-based system is disclosed in US2005/0042578 A1 in which a vehicle chassis is mounted on a rotary plate above a Stewart platform. However, the apparatus is not compact in the vertical direction, which may necessitate a bigger room for installation, and the length and nature of the actuators inhibit precise control. In the apparatus disclosed in US2015/004567 A1, which is intended to be more compact than previous designs of motion generators, rotation of a mobile platform is limited to relatively small degrees of yaw. In the paper entitled "Multi-Degree of Freedom Platform based on Spherical Wheels" by SangA Park et al., published at pages 1061-1065 of 2015 IEEE International Conference on Advanced Intelligent Mechatronics (AIM), a prototype platform was fabricated and experimental results of orientation motion in open loop control were reported, based on spherical wheels for orientation and linear guided actuator for translation so that two motions were decoupled to each other, capable of control independently.

It is known from EP 1 096 461 A2 (published 02 May 2001; "Motion system") that a motion system for moving a platform, particularly for vehicle motion simulation, uses stationary lower rails arranged starwise and arcuate upper rails fixed to the platform underside, with lower and upper carriages running on the respective rails and linked by a movable joint to form carriage units, each unit having a drive acting between the upper carriage and the platform to rotate the platform about its vertical axis. The upper rails can form a continuous circular rail concentric with the platform axis; the movable joint may be a rotary bearing or a ball joint; the lower rails may be coplanar or mounted on inclined ramps or a conical support; and the rotation drive may be realised by a geared motor and pinion engaging a circular rack on the platform or by a belt drive. The arrangement enables platform translations in two directions and rotation about the vertical axis, and in the ramp-based embodiment translations can be combined with platform tilt. The document fails to disclose the specific configuration of two rails arranged at the base of the platform with a magnet way in between these two rails.

An object of the present invention is to provide an improved motion generator, and improved motion systems incorporating such motion generators, having improved yaw characteristics.

### Summary of the Invention

According to one aspect of the invention there is provided a motion generator according to claim 1. Optional features are provided in the dependent claims.

Such a 3DOF (i.e. movements in the X and Y directions, and yaw) motion generator may be advantageous, especially in vehicle driving and flying simulation applications, in that it may be able to rotate the platform through 360° or more. The motion generator may be further advantageous in that it may have good levels of excursion i.e. the platform may be caused to move one or more metres in a horizontal direction (i.e. translate) with respect to the surface. Such a combination of high levels of platform rotation and excursion are highly advantageous in a motion generator for vehicle driving simulation applications. Furthermore, the motion generator of the invention may be advantageously compact in height.

The linear guides may typically be mounted on the surface, and the circular guide may be on the rotatable platform. The linear guide carriages may be driven to move on the linear guides by actuators, in order to translate the linear guide carriages along the linear guides. At least one of these actuators may comprise a linear motor, as they permit high levels of movement control, although the skilled addressee will appreciate that other actuators may be used. Preferably, each of the actuators comprises a linear motor.

The peripheral guide carriages may be arranged at least partly below the platform. At least a portion of the peripheral guide carriages may extend about an outer edge of the platform. The peripheral guide carriages are mounted for rotation on the linear guide carriages and may be, for example, pivotally mounted thereon. In one embodiment, one of the peripheral guide carriages and the rotatable platform includes at least one linear motor coil which interacts with a corresponding linear motor magnet way on the other of the peripheral guide carriages and the rotatable platform to rotate the platform. In a preferred embodiment, the peripheral guide carriage comprises the linear motor coil and the rotatable platform comprises or supports the corresponding linear motor magnet way. In order to enhance operation, the or each linear motor magnet way may be curved. The or each linear motor coil may be correspondingly curved.

In another embodiment, at least one actuator for rotating and/or for translating the platform comprises a belt drive. For example, a suitable belt drive may be an omega belt drive. The belt, which may be toothed or flat, may extend about or at the periphery of the platform.

In another embodiment, at least one actuator for rotating the platform comprises a gear which drives a correspondingly toothed rim on or fast with the platform to rotate the platform. The rim may be arranged at or about the periphery of the platform.

In operation, movement of two adjacent linear guide carriages along their respective linear guides towards the centre may move the rotatable platform above the surface along or in the direction of another linear guide, that is to say generally along the longitudinal axis of the linear guide, away from the centre. Conversely, movement of two adjacent linear guide carriages along their respective linear guides away from the centre moves the rotatable platform above the surface along or in the direction of another linear guide towards the centre.

As noted above, the rotatable platform may rotate up to 360° or by more than 360° providing very useful levels of yaw, for example for vehicle driving simulation. In this connection, the payload of the motion generator may be a vehicle chassis or cockpit or model thereof. In the context of the present invention, the payload of the primary motion generator is typically greater than 80 kg. The primary payload may include a human user, or vehicle or model of all or part of a vehicle. Thus, the payload may typically be more than about 80kg, or more than about 250kg, or more than about 500kg, or more than about 2 tonnes (for example in the form of a full vehicle chassis).

According to another aspect of the invention there is provided a motion system comprising a motion generator according to the invention, and a control system arranged to control operation of the motion generator.

According to another aspect of the invention there is provided a combination comprising a first (or primary) motion generator or motion system according to the invention together with a second (or secondary) motion generator including a second motion generator platform for supporting a payload, the secondary motion generator being mounted on the rotatable platform of the first motion generator or motion system. The secondary motion generator may be a 3, 4, 5, or 6° of freedom motion generator. Such a combination is advantageous in that the primary motion generator gives significant levels of excursion with high precision and the secondary motion generator provides motion for the payload of the secondary in additional or all degrees of freedom.

According to another aspect of the invention there is provided a vehicle driving simulator including a motion generator according to the invention or a motion system according to the invention, or a combination of motion generators according to the invention, a vehicle body element such as a chassis, or indeed full body, and including at least one environment simulation means selected from visual projection or display means, and audio means. Preferably, the projector and/or display means extends completely around the rotatable platform. In one embodiment, the projection and/or display means is mounted on or about the rotatable platform. Where the projection and/ or display means is mounted on the rotatable platform it may move with the platform.

According to a further aspect of the invention, there is provided a method of producing a motion generator according to the invention, as set out in claim 15.

### Brief Description of the Drawings

Motion generators, motion systems and vehicle driving simulators in accordance with the invention will now be described, by way of example only, with reference to the accompanying drawings, Figures 1 to 24, in which:
Figure 1 is a perspective view from above on one side of a motion generator in accordance with the invention;
Figure 2 is a detail view showing a portion of the motion generator of Figure 1;
Figure 3 is a vertical cross-sectional view of another portion of the motion generator of Figure 1;
Figure 4 is a schematic perspective view of the motion generator in accordance with the invention in a nominal or normal condition;
Figure 5 is a schematic perspective view of the motion generator of Figure 4 in a surge rearward configuration condition;
Figure 6 is a schematic perspective view of the motion generator of Figure 4 in a surge forward condition;
Figure 7 is a schematic perspective view of the motion generator of Figure 4 in a sway rightward condition;
Figure 8 is a schematic perspective view of the motion generator of Figure 4 in a sway leftward condition;
Figure 9 is a schematic perspective view of the motion generator of Figure 4 in a yaw anticlockwise (as viewed from above) condition;
Figure 10 is a schematic perspective view from above of the motion generator of Figure 4 in a yaw clockwise condition;
Figure 11 is a schematic perspective view of the motion generator of Figure 4 in an extreme yaw condition;
Figure 12 is a schematic perspective view of the motion generator of Figure 4 in a combined surge rearward and sway rightward condition;
Figure 13 is a schematic perspective view of the motion generator of Figure 4 in a combined surge rearward and yaw anticlockwise condition;
Figure 14 is a schematic perspective view of a motion generator in accordance with a different embodiment of the invention;
Figure 15 is a detailed view of a detailed view of a portion of the motion generator of Figure 14;
Figure 16 is a plan view of the motion generator of Figure 14 in accordance with the invention;
Figure 17 is a perspective view from above and one side of another motion generator in accordance with the invention;
Figure 18 is a perspective view from below and one side of the motion generator of Figure 17;
Figure 19 is a plan view of the motion generator of Figure 17 in a surge forward condition;
Figure 20 is a plan view of the motion generator of Figure 17 in a sway right condition;
Figure 21 is a plan view of the motion generator of Figure 17 with the chassis in a sway right, and yaw right condition;
Figure 22 is a plan view of the motion generator of Figure 17 with the chassis in a sway left, and extreme yaw condition;
Figure 23 is a schematic view of a control system for use with a motion generator in accordance with the invention; and
Figure 24 is a schematic view of a vehicle driving simulator in accordance with the invention.

### Description

### Motion generator

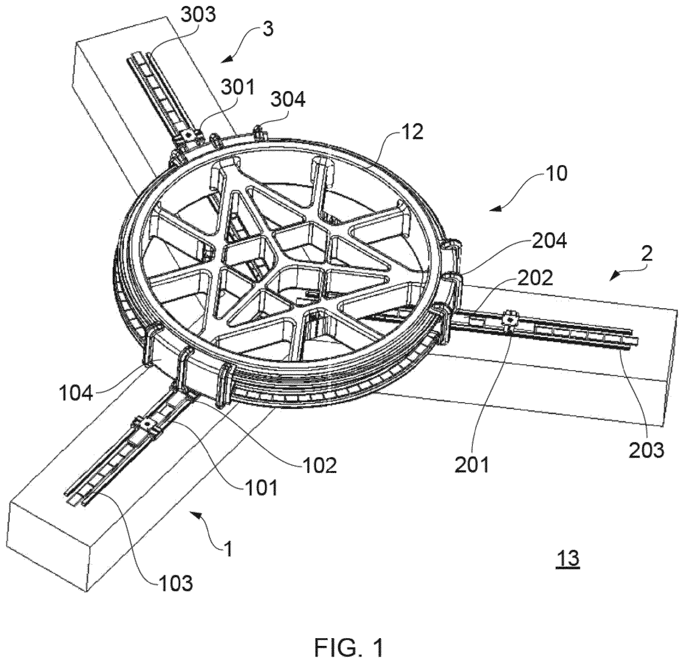

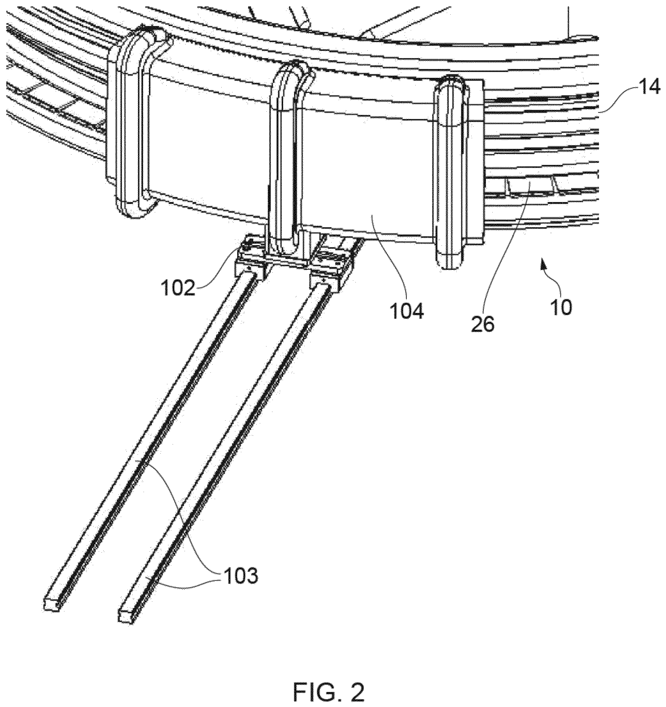

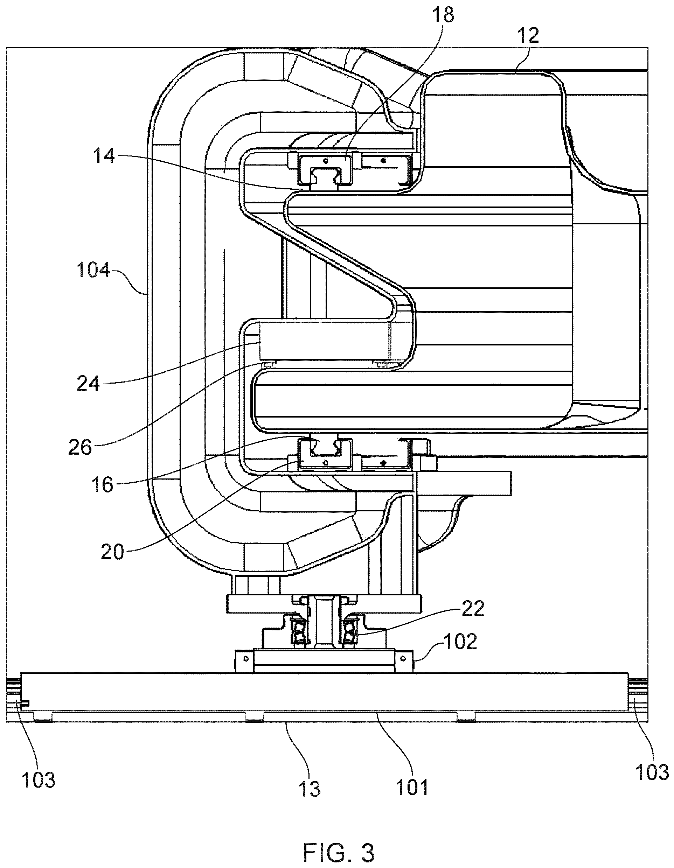

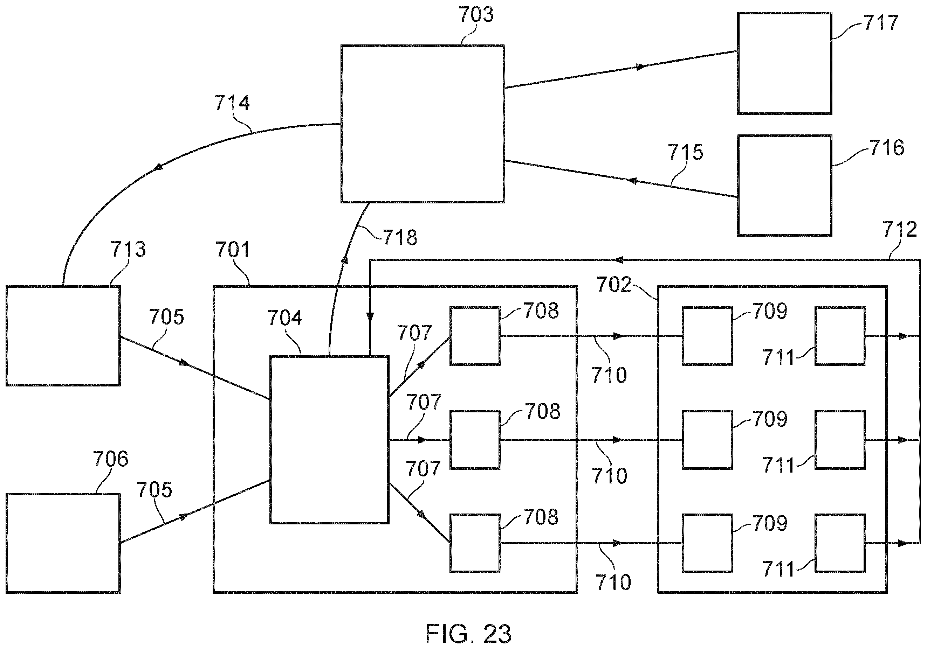

Figures 1-3 show a motion generator 10 in accordance with the invention. The motion generator 10 comprises a rotatable circular platform 12 which is arranged to rotate above a surface 13 (identified in Figure 3). The motion generator 10 further comprises three actuator assemblies, 1, 2, and 3, which extend ray-wise from a centre. The actuator assemblies 1, 2, 3, each comprises a linear guide actuator in the form of a linear motor 101, 201, and 301 respectively. Furthermore, the actuator assemblies 1, 2, 3 each comprise a linear guide carriage 102, 202, and 302 which are driven by the linear motor 101, 201, and 301 respectively on associated linear guides 103, 203, and 303 which extend ray-wise from the centre. It will be appreciated by the skilled addressee that in the context of the present invention, the "centre" does not refer to an exact central point, and the linear guides may be offset from a central point. Therefore, the term "centre" is used in a more general sense than for example the term "point". A peripheral guide carriage (104, 204, and 304) is mounted on the associated one of the linear guide carriages 102, 202, and 302. The peripheral guide carriages 104, 204, and 304 are pivotally mounted on the respective linear guide carriages 102, 202, and 302 and support the periphery of the rotatable platform 12. As shown in more detail in Figure 3, peripheral guide carriage 103 supports the periphery of rotatable platform 12. Guide rails 14 and 16 are disposed around the periphery of upper and lower surfaces of the rotatable platform 12. The circular guide rails 14, 16 are arranged to travel within peripheral guide carriage trucks 18, 20 respectively. As shown in Figure 3, the peripheral guide carriage 103 is mounted for pivotal movement by spherical bearing 22 on the linear carriage truck 102 which is, in turn, mounted for sliding movement on the linear guide 103 and driven by linear motor 101.The peripheral guide carriage also supports a curved circular linear coil 24. A correspondingly shaped circular linear motor magnet way 26 is arranged around the periphery of the rotatable platform 12. In use under the control of a control system (for example as described above in relation to Figure 23) the linear motor including coil 24 and magnet way 26 imparts a tangential force on the rotatable platform 12 in a chosen direction of rotation. Whilst only peripheral guide carriage 104 has been described in detail above, the other actuator assemblies 2, and 3; linear motors 201, and 301; linear guide carriages 202, 302; and peripheral guide carriages 204, 304 are similarly arranged so that the linear motors provided by peripheral guide carriages 104, 204, and 304 together can be operated together to rotate the platform 12 into different rotational positions about a vertical axis with great precision. The platform 12 may rotate about the vertical axis through up to or more than 360°. In order to facilitate rotation through more than 360°, special electrical connections may be used. For example, one or more slip rings might be used to maintain electrical continuity between the actuators and a control system. Additionally, or alternatively, the linear guide carriages 102, 202, and 302 can be moved by the corresponding linear motors 101, 201, and 301 along the corresponding linear guides 103, 203, and 303, to translate the rotatable platform 12 in to different horizontal positions along a plane parallel with the surface 13. The motion generator 10 described above demonstrates good levels of excursion which is useful, for example, in vehicle driving simulation. For example, platform 12 may move 2 metres in any horizontal direction from the centre.

The movement of the linear guide carriages and peripheral guide carriages of the motion generator in accordance with the invention are described in more detail below.

### Motion Generator

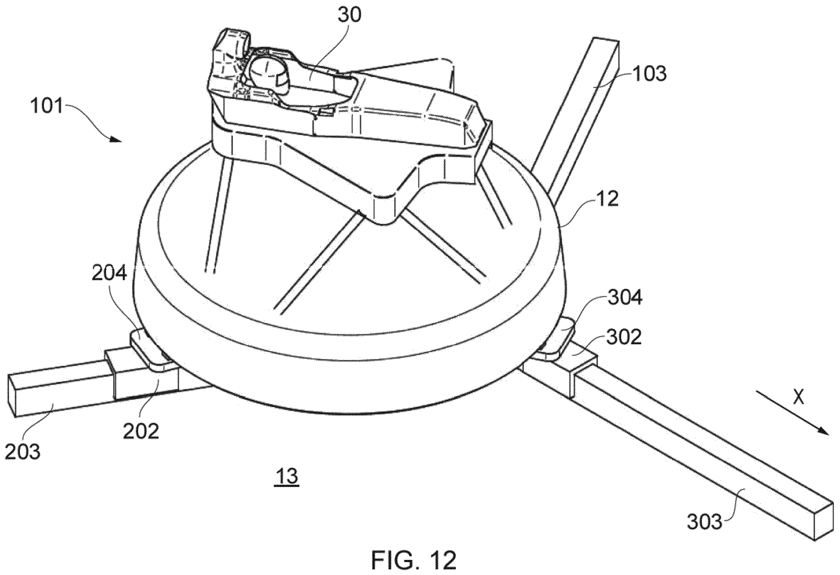

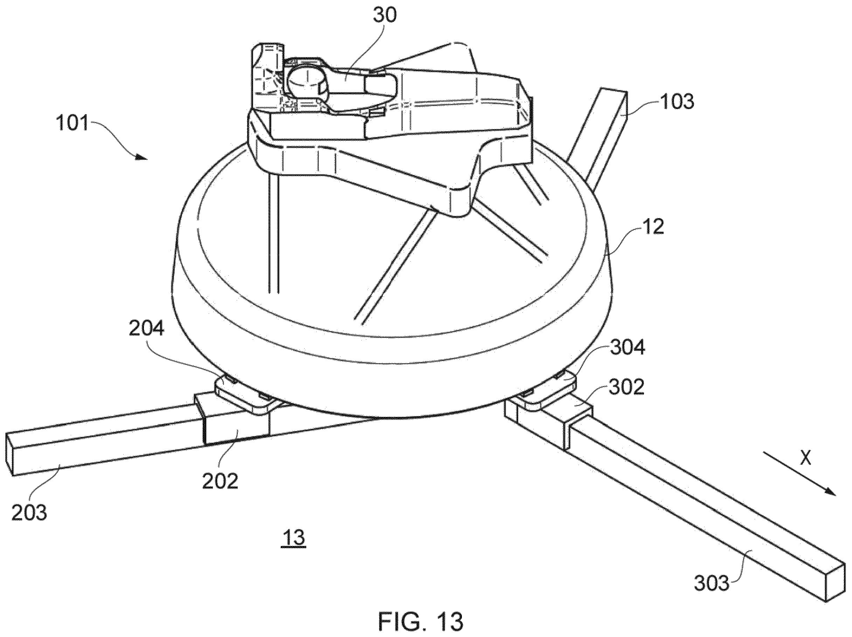

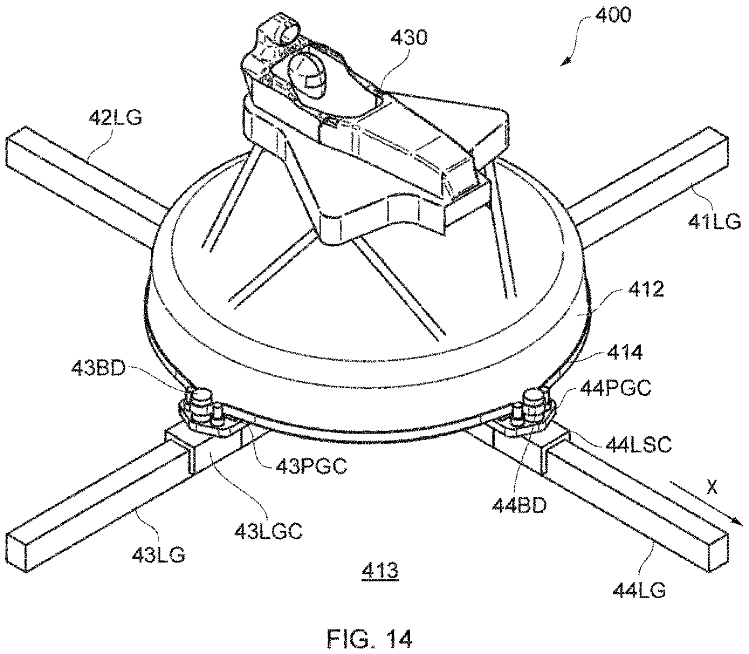

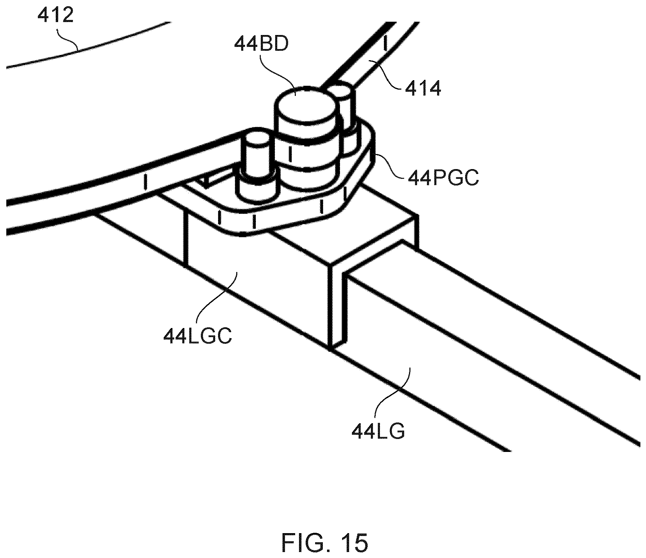

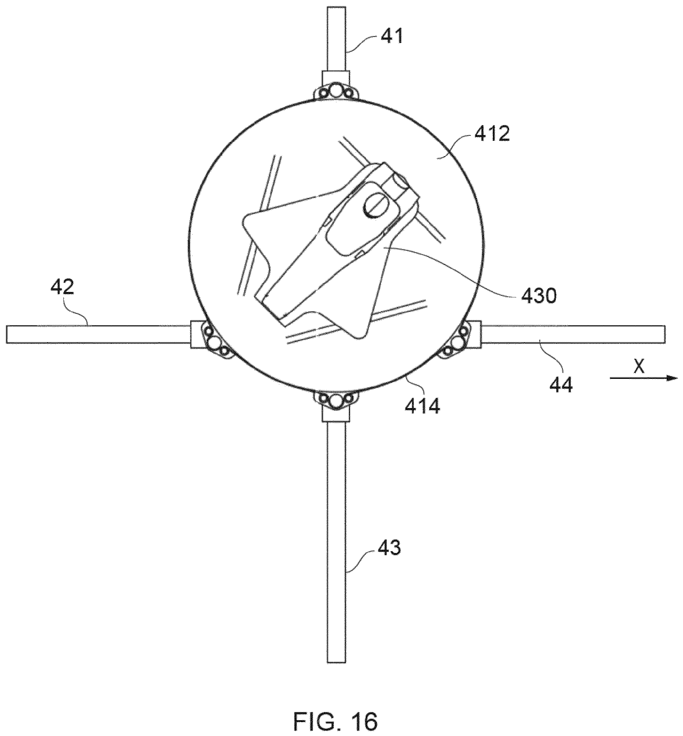

A motion generator 400 in accordance with another embodiment of the invention is shown in Figure 14,15, and 16. In this embodiment, the curved linear motors of the Figure 1-13 embodiment are replaced by an omega belt drives which engage a peripheral toothed belt arranged around a rotatable platform. Suitable omega belt drives are produced, for example, by Bosch Rexroth AG, and may be more economical than linear motors. In more detail, motion generator 400 comprises a rotatable platform 412 which supports a chassis 430. The rotatable platform 412 is supported for rotation about a vertical axis above surface 413 by peripheral guide carriages 41PGC, 42PGG, 43PGC and 44PGC on associated linear guide carriages 41LGC, 42LGC, 43LGC and 44LGC which are arranged to move along associated linear guide rails 41LG, 42LG, 43LG and 44LG driven by linear motors (not shown). The peripheral guide carriages 41PGC, 42PGG, 43PGC and 44PGC support omega belt drives 41BD, 42BD, 43BD, and 44BD which engage a toothed belt 414 disposed around the periphery of the rotatable platform 412 and can be driven to rotate the platform 412 in either direction. The omega belt drives 41BD, 42BD, 43BD, and 44BD and toothed belt 414 are shown in more detail in Figure 15. The actuators (the omega belt drives, and the linear motors) are operated under the control of a control system (for example as described in relation to Fig. 23). The rotatable platform 412 can be rotated with great precision through many orientations including extreme yaw angles (i.e. 360° or greater). Furthermore, the rotatable platform 412 can be displaced horizontally (translated) above surface 413 by coordinated operation of adjacent linear guide carriages 41LGC, 42LGC, 43LGC, and 44LGC to push the rotatable platform. For example, Figure 16 shows the motion generator 400 in a combined sway left and 100-degree left yaw condition. This embodiment also features good excursion levels for a motion generator of its size. Specifically, the moving part (i.e. platform 412) may have a diameter of 3 metres, but it may move by in excess of 1 metre in any horizontal direction. It will be appreciated that the peripheral toothed belt 414 may be replaced by a flat belt which is driven by suitable drives.

### Motion Generator

In a further embodiment of a motion generator in accordance with the invention, the omega belt drive actuators described in relation to the motion generator described in Figure 14-17 are replaced by rotary actuators, each rotary actuator driving a gear which engages a toothed rim arranged around the periphery of the platform. This embodiment has similar advantages to the Figure 14-17 embodiment.

### Combination of motion generators.

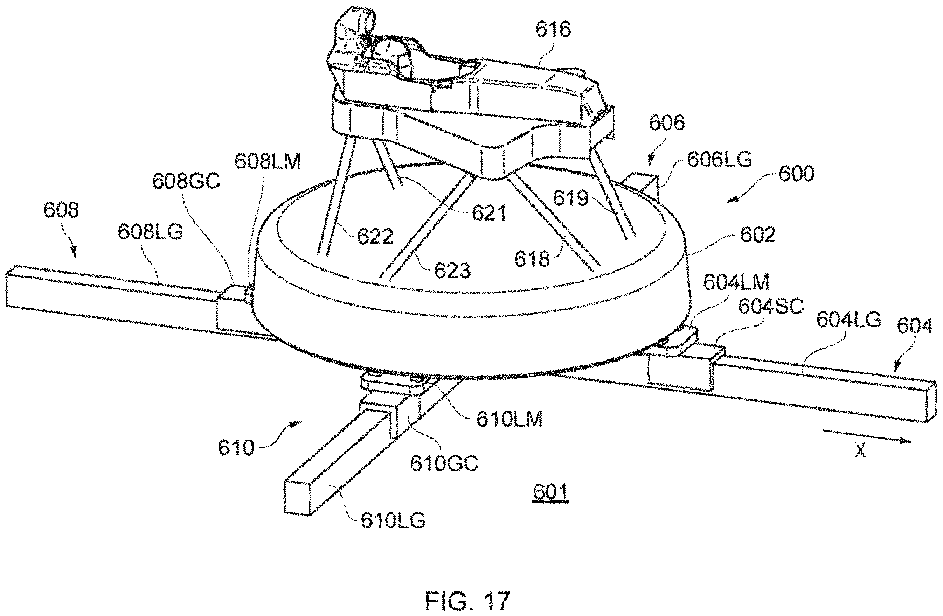

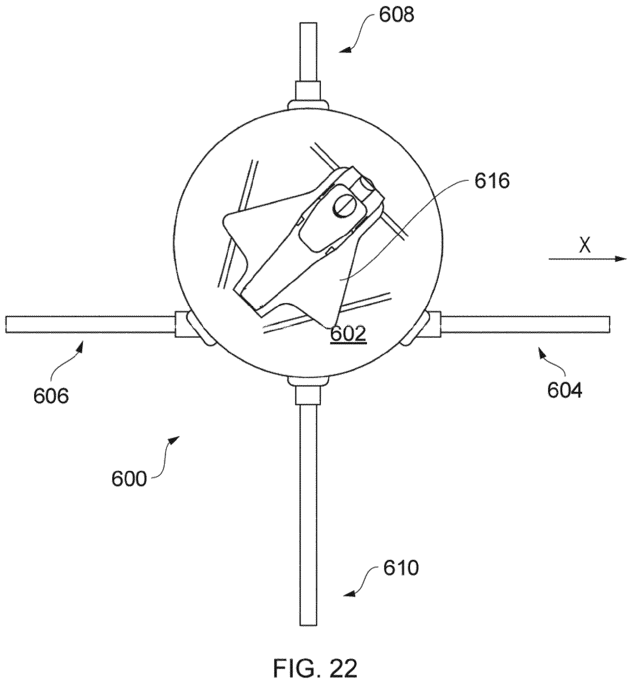

A combination comprising a primary motion generator 600 (which is a motion generator in accordance with the invention) in series with a further motion generator, to form a combination is shown in Figures 17-22. The motion generator 600, which is mounted on surface 601, comprises a rotatable platform 602 has four actuator assemblies 604, 606, 608, and 610 which each extend outwardly at right angles from an adjacent actuator assembly from a centre 6. Each actuator assembly comprises a linear guide 604LG, 606LG, 608LG, and 610LG respectively; a driveable linear guide carriage 604GC, 606GC, 608GC, and 610GC respectively arranged for movement along the associated linear guide; and a linear motor 604LM, 606LM, 608LM, and 610LM respectively. The platform is arranged for rotation about a vertical axis being supported by the rollers on the upper surface of linear motors 604LM, 606LM, 608LM, and 610LM which engage with rails 612, 614 of a circular track at the base of the platform. As with other motion generators the invention, the platform 602 may rotate about the vertical axis through more than 360°. For example, one or more slip rings might be used to maintain electrical continuity between the actuators and a control system. A circular magnet way 615 is also arranged at the base of the platform 602 between rails 612,614. A chassis 616 is supported above the platform 602 on struts 618,619, 620 (obscured) 621, 622, and 623. The struts are provided by another motion generator 630 (which is not shown or described in detail) which is mounted on the platform 602 of motion generator 600, as a secondary motion generator) and which provides 6 degrees of freedom movement for the chassis 616.

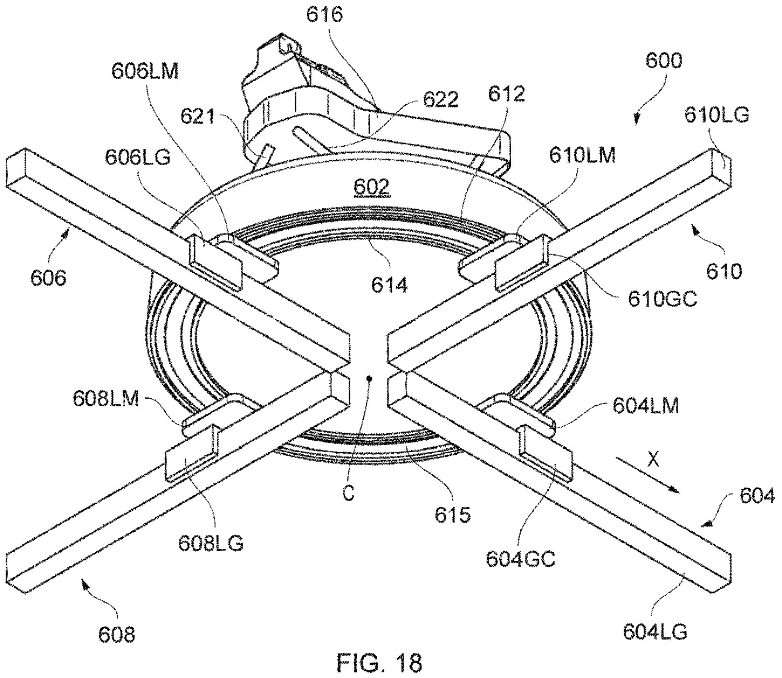

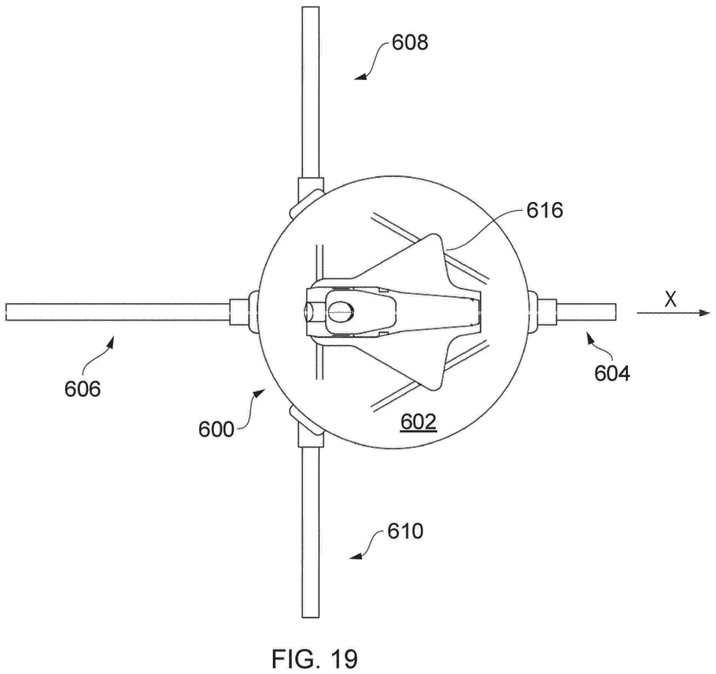

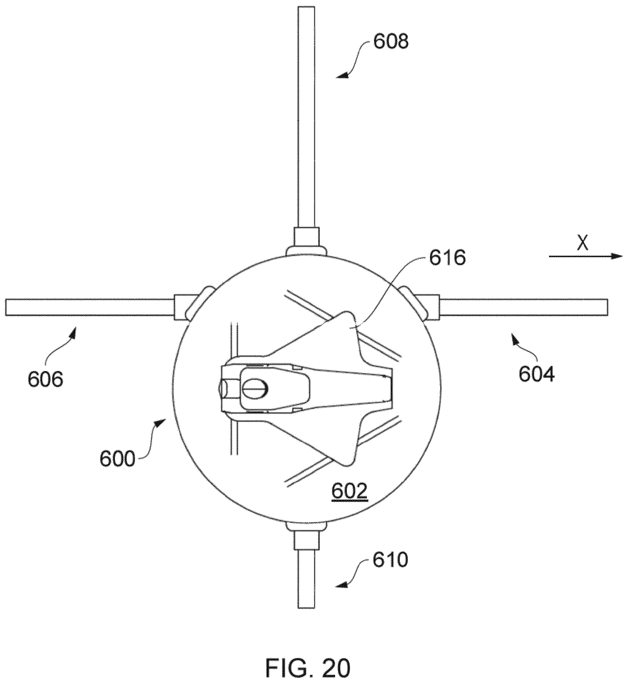

In use, the platform 602 is rotated with great precision about a vertical axis through operation of some or all of the linear motors 604LM, 606LM, 608LM, and 610LM respectively under the control of a control system (for example as described in relation to Figure 23) interacting with the magnet way 615. The platform can also be moved in X and Y directions, again with great precision, from the neutral or nominal condition shown in Fig 17 or 18 by movement of the linear guide carriages 604GC, 606GC, 608GC, and 610GC along their respective linear guides. For example, Figure 19 shows the platform 602 in a surge forward condition. Figure 20 shows the platform 602 in a sway right condition.

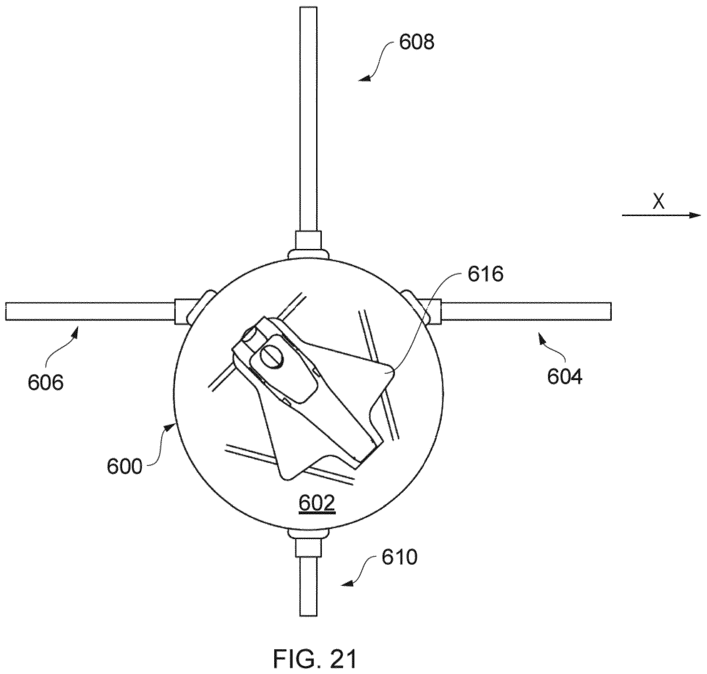

The motion generator 600 described above demonstrates good levels of excursion which is useful, for example, in vehicle driving simulation. For example, platform 602 may move 2 metres in any horizontal direction from the centre. Furthermore, the secondary motion platform provides additional motion. It will be noted that only a limited number of conditions is described above. It will be appreciated by the skilled addressee that the primary 600 and secondary motion generators 630 may be operated independently or in combination to move chassis 616 into many more conditions such as those described above and below and including, but not exclusively surge rearward, sway right, heave down, roll left side down, pitch nose up and yaw nose right. For example, Figure 21 shows the platform 602 in a combined surge right and yaw right condition. Furthermore, it will also be appreciated by the skilled addressee that the primary 600 and secondary 630 motion generators may be operated to move the chassis 616 into multiple combinations of such conditions.

### Control System

Figure 23 shows a control system 701 for use in controlling operation of a motion generator in accordance with the invention. In relation to Figure 23, the motion generator is referred to as 702, but the control system 701 is applicable to the other motion generators, motion systems, and motion simulators described herein. The control system 701 comprises a motion controller 704 which executes a computer program, preferably in a deterministic or real time manner, and which takes motion demand inputs 705 from a demand generator such as a simulation environment 703 or a set point generator 706. The motion controller computes the positions, accelerations and/or forces 707 required to be produced at each actuator 709 to in order to generate the demanded motion profile 705. The control system 701 also comprises servo drives 708 which provide precisely controlled electrical currents 710 to drive the actuators 709. In operation, the motion controller sends to each servo drive 708 a demanded position or force 707. The actuator 709 has a motion measurement device 711, such as an encoder, which provides motion feedback 712 to the motion controller, optionally via the servo drive. The motion controller compares the demanded motion profile 705 to the one measured 712 and updates the actuator demand 707 accordingly. Figure 23 also shows the control system with a simulation environment 703, such as a driving simulation in which the physics of a simulated vehicle and its environment, such as a racetrack or city roads, are computed. In this embodiment the control system 701 receives motion demands from the simulation environment 703, which represent the motion of a virtual vehicle. The computer program determines the motion of the vehicle in a virtual world 714, then applies a motion cueing algorithm 713 (MCA, also known as washout filters) to transform the simulated vehicle motions into those that can be represented by the motion generator. These calculated motions are then provided to the control system as motion demands 705. The MCA 713 could be part of the simulation environment 703 or the control system 701 or separate to both. The simulation environment 703 may receive inputs signals 715 from control devices 716 such as steering, throttle or brake inputs, which an operator, I.e. a human user such as a driver, passenger or pilot uses to control the virtual vehicle in the simulation environment. The operator would likely be a passenger on the motion generator 702. These inputs 715 may be passed back to the simulation environment via the control system or directly. The simulation environment is also likely to produce an output on a visual display 717 for the driver, passenger, or other user or operator. The simulation environment may also require additional data 718 from the control system, such as relating to the position of the motion generator, or control device inputs signals.

### Method of operating a motion generator/motion system

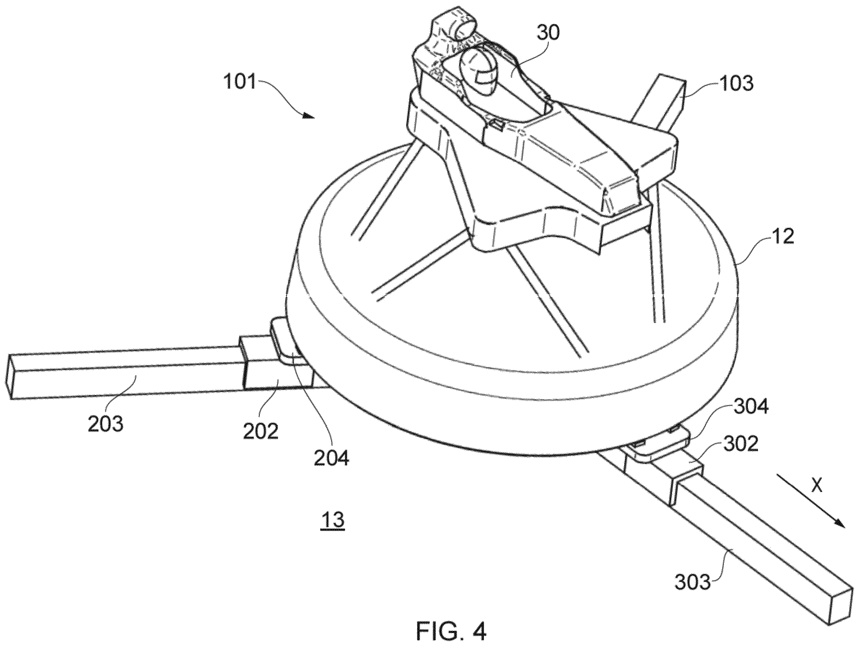

The motion generators described above can be combined with a control system (for example, as described in relation to Fig 23) to produce a motion system. The motion generators can be controlled by the control system to move into the conditions shown by way of example in Figures 4-11. In the motion system arrangement shown in Figures 4 to 11, a motor racing vehicle chassis 30 is mounted on the rotatable platform 12 of a motion generator 10 in accordance with the invention The motion generator may be any motion generator in accordance with the invention, or all or part of a combination of motion generators in accordance with the invention.

### Nominal

In Figure 4, the motion generator platform 12 is shown in a nominal or neutral condition with the chassis pointing in direction X. The movement of each linear guide carriage 102, 202, 302 and associated peripheral guide carriage, 104, 204, 304, and the orientation of the rotatable platform 12 in this condition is as follows:

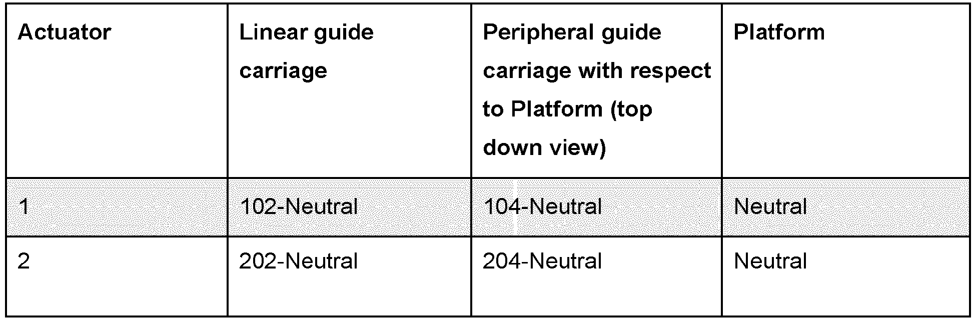

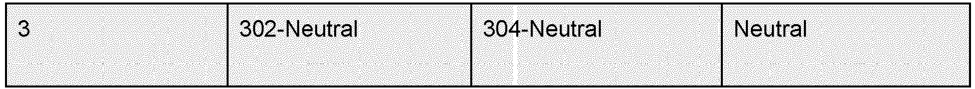

### Surge rearward

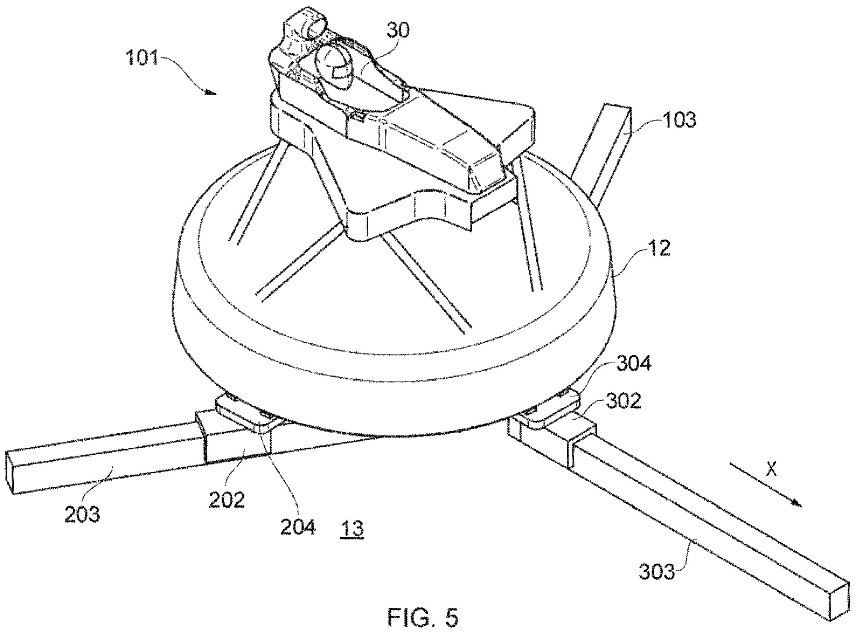

In Figure 5, the motion generator platform is shown in a surge rearward condition. The movement of each linear guide carriage 102, 202, 302 and associated peripheral guide carriage, 104, 204, 304, and the orientation of the rotatable platform 12 in this condition is as follows:

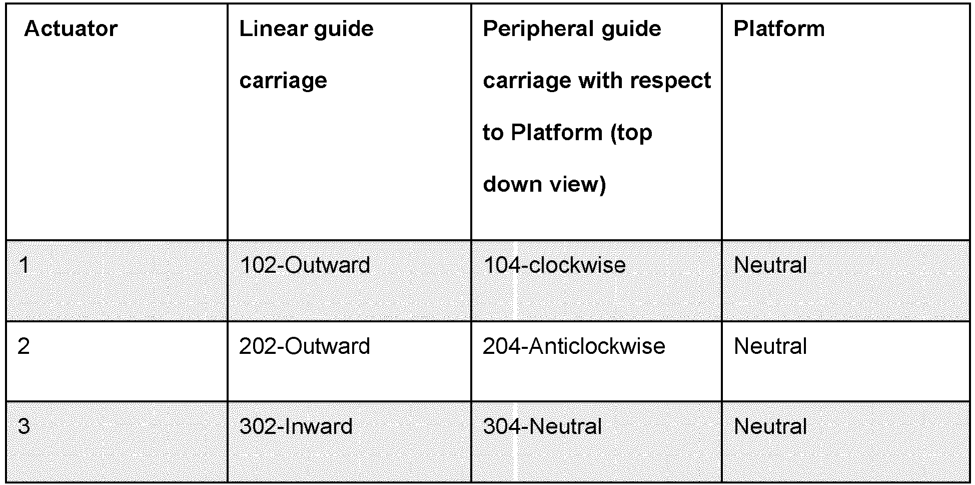

### Surge forward

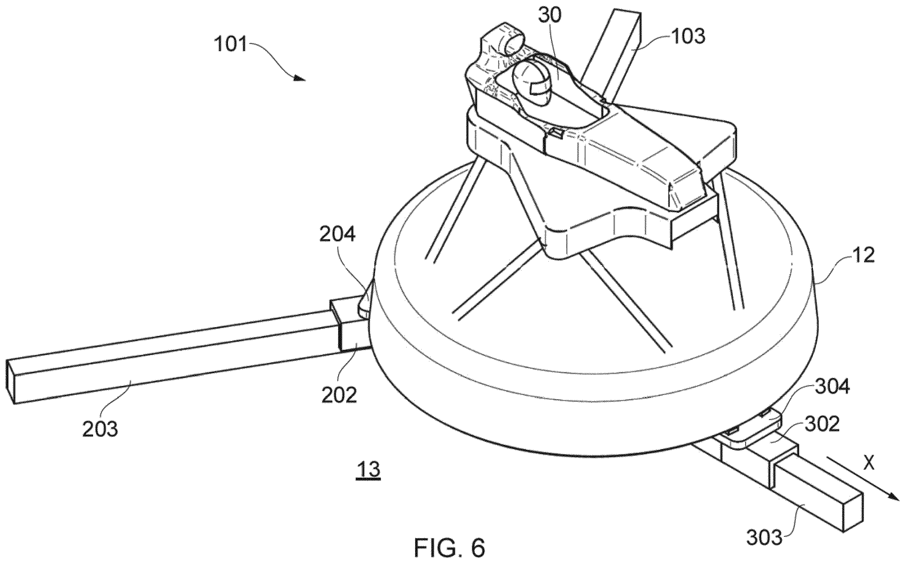

In Figure 6, the motion generator platform is shown in a surge forward condition. The movement of each linear guide carriage 102, 202, 302 and associated peripheral guide carriage, 104, 204, 304, and the orientation of the rotatable platform 12 in this condition is as follows:

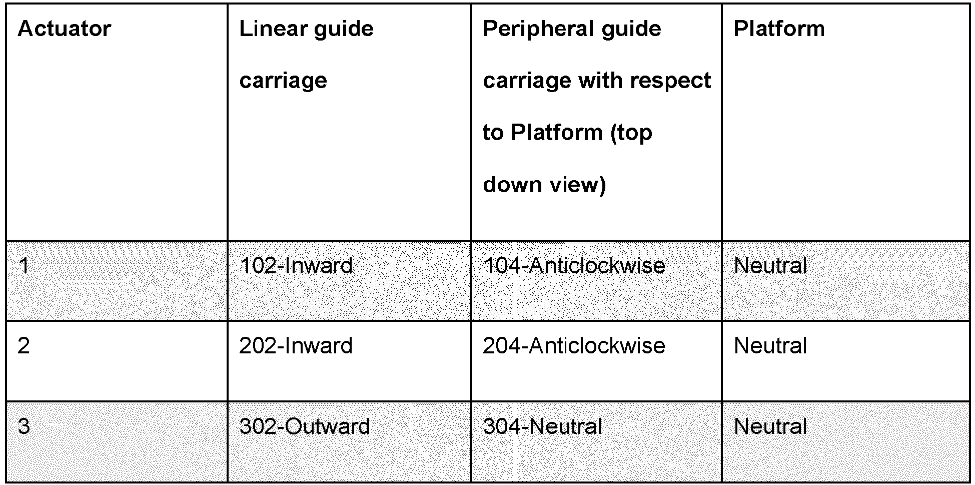

### Sway rightward

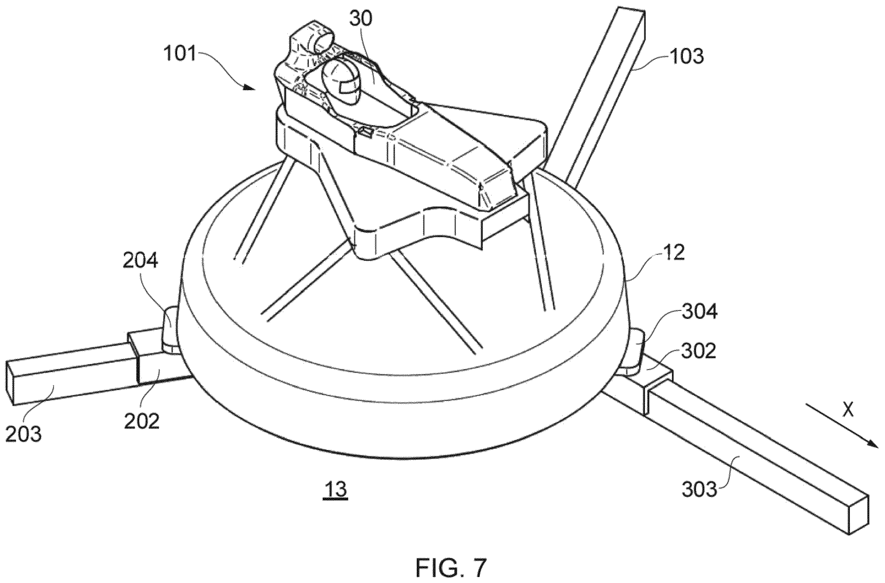

In Figure 7, the motion generator platform is shown in a sway rightward condition. The movement of each linear guide carriage 102, 202, 302 and associated peripheral guide carriage, 104, 204, 304, and the orientation of the rotatable platform 12 in this condition is as follows:

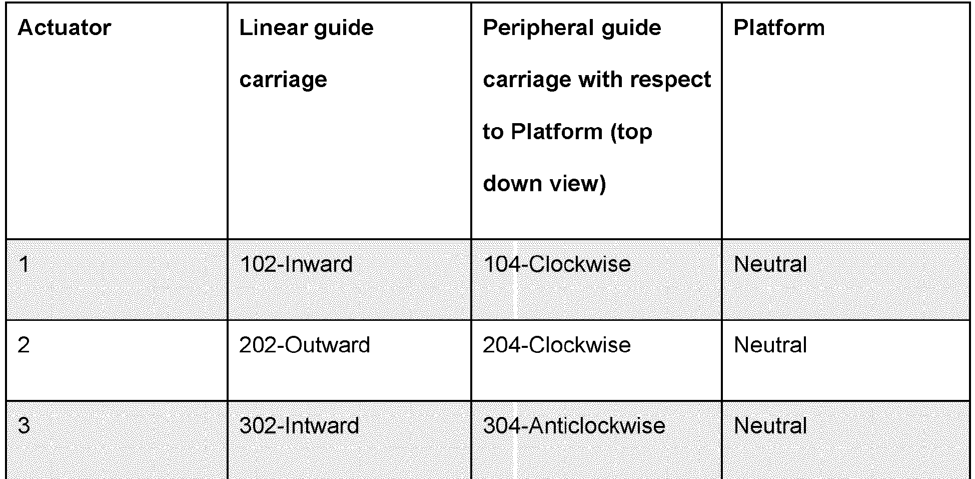

### Sway leftward

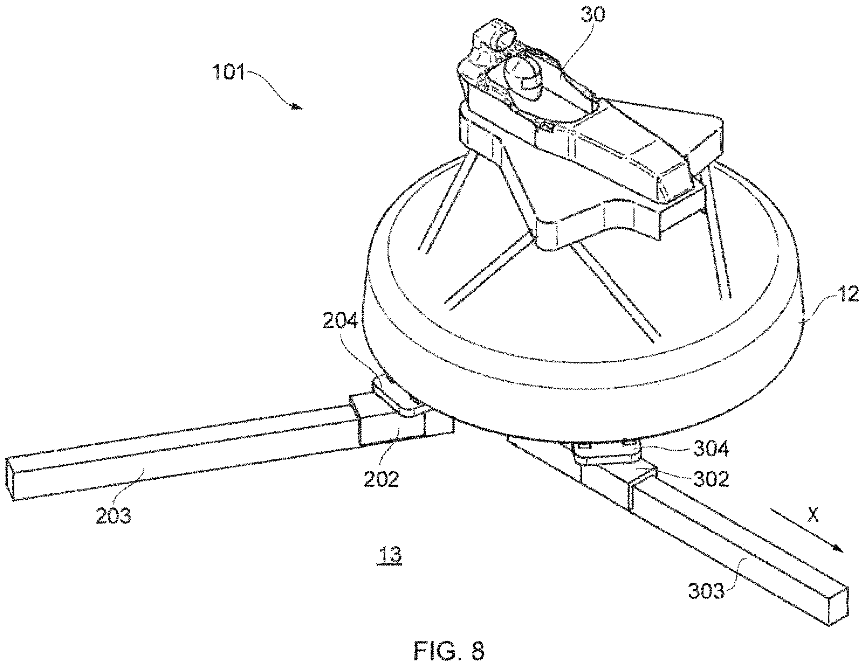

In Figure 8, the motion generator platform is shown in a sway leftward condition. The movement of each linear guide carriage 102, 202, 302 and associated peripheral guide carriage, 104, 204, 304, and the orientation of the rotatable platform 12 in this condition is as follows:

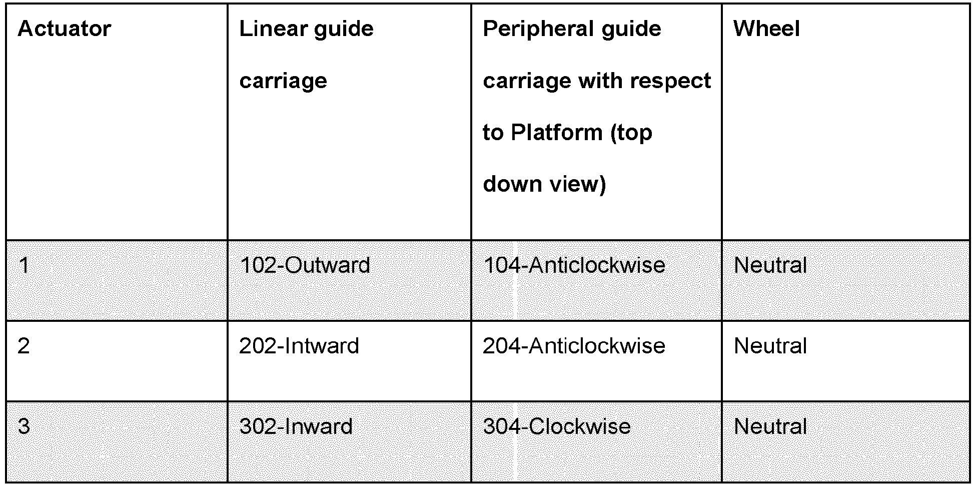

### Yaw anticlockwise

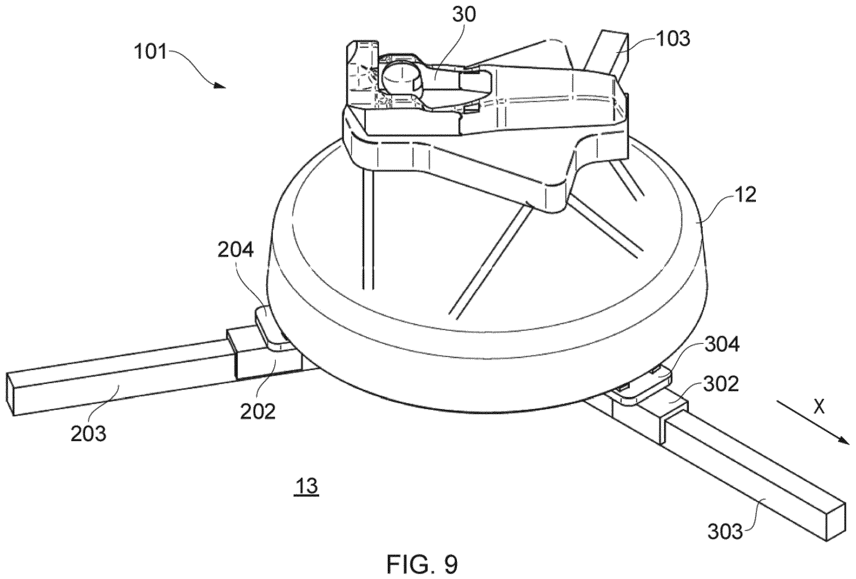

In Figure 9, the motion generator platform is shown in a yaw anticlockwise (or to the left - either as viewed from above) condition. The movement of each linear guide carriage 102, 202, 302 and associated peripheral guide carriage, 104, 204, 304, and the orientation of the rotatable platform 12 in this condition is as follows:

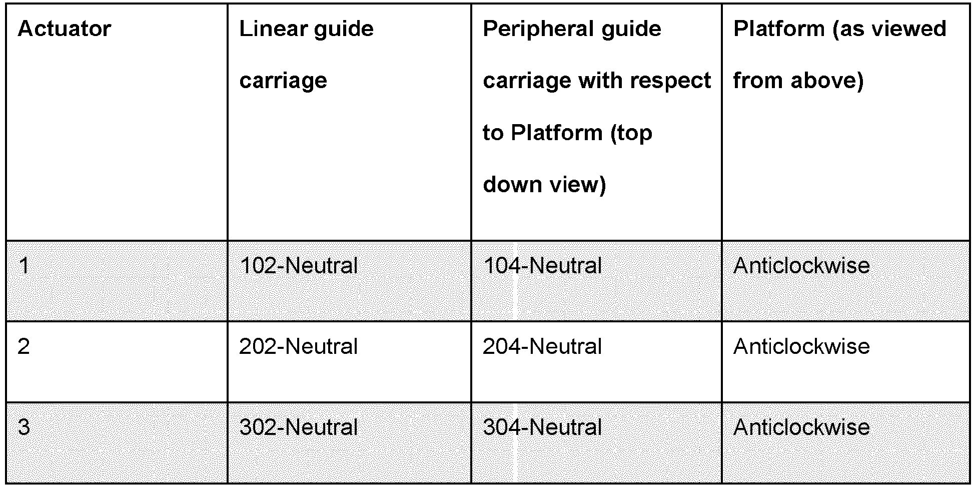

### Yaw clockwise

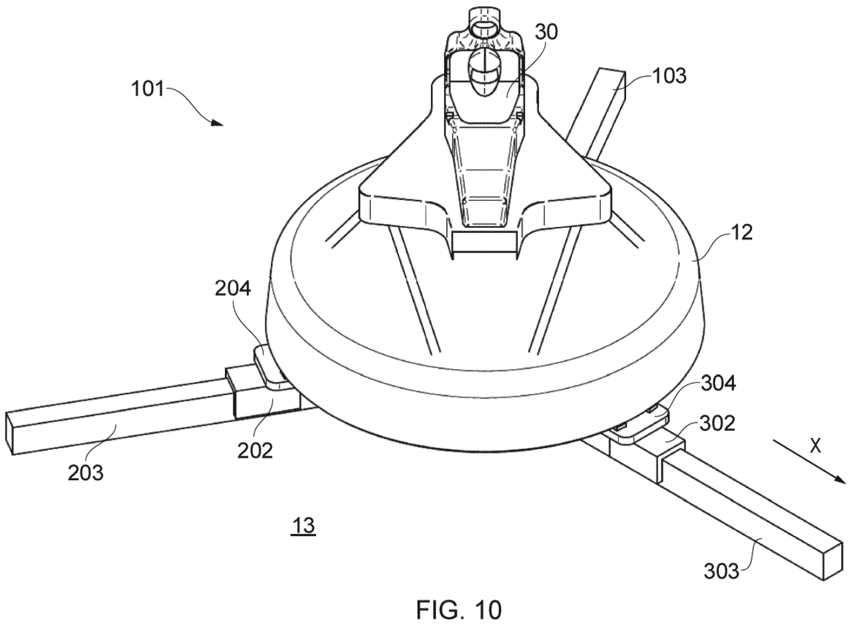

In Figure 10, the motion generator platform is shown in a yaw clockwise (or to the right - either as viewed from above) condition. The movement of each linear guide carriage 102, 202, 302 and associated peripheral guide carriage, 104, 204, 304, and the orientation of the rotatable platform 12 in this condition is as follows:

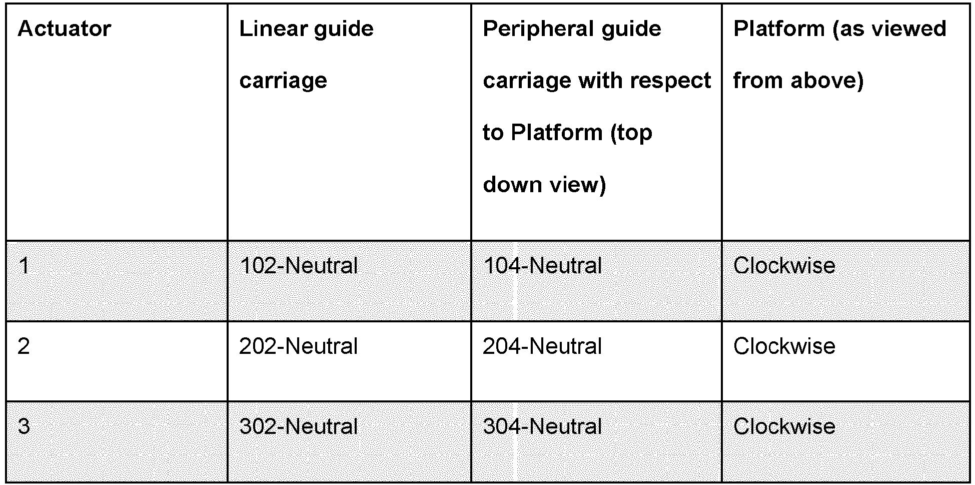

### Extreme Yaw

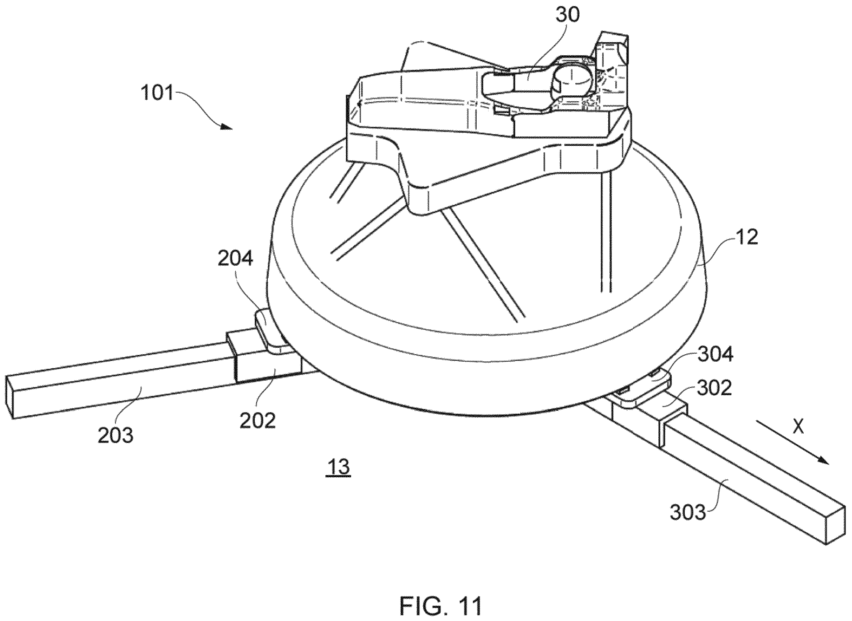

In Figure 11, the motion generator platform 12 is shown in a more extreme yaw clockwise or anticlockwise (as viewed from above) condition compared with the conditions shown in Figures 9 or 10. As noted above the motion generator platform 12 of motion can be rotated through more than 360 degrees of rotation to move the payload of the motion generator - the chassis 30 - into different orientations. The precise control of the rotation of the platform, the high levels of yaw for the payload, and its displacement in X and Y directions are advantageous features of the invention.

### Vehicle Driving Simulator

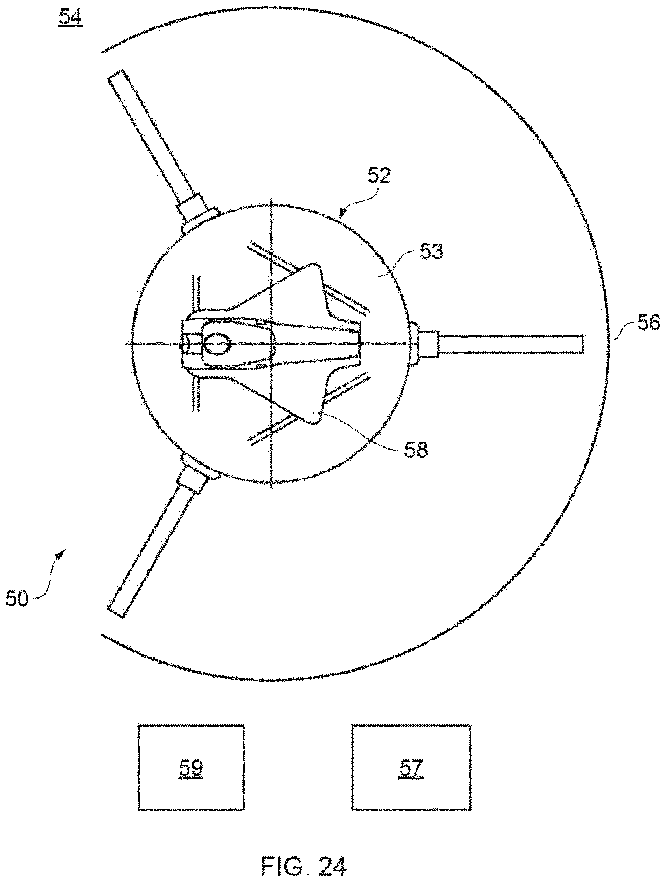

A vehicle driving simulator 50 in accordance with the invention is shown in Figure 24. The driving simulator 50 comprises a motion system 52 including a motion generator 53 in accordance with the invention (for example, as described above in relation to Figures 1 to 11, or in relation to Figures 17 to 22) which is mounted on a surface 54 in front of a projection system 56. The motion generator 53 is under the control of a control system 57. Images of a driving environment can be displayed to a user in chassis 58. An audio system 59 provides sound to the user replicating the sounds of a driving environment. Wrap around projection systems extending for 360 degrees around the periphery of the motion system 52 are also contemplated for a more immersive experience taking advantage of the extreme yaw performance of the motion system 52 of the invention resulting from the design of the motion generator 53. The projection and or display means may be mounted about the rotatable platform, preferably for movement linked to the platform. The motion generator 53 of the driving simulator 50 is operated under the command of a control system 57, generally as described above. It will be appreciated by the skilled addressee that the motion system 52 used in the vehicle driving simulator 50 is especially compact in the vertical direction. This better replicates the height of a vehicle being simulated, in comparison with other motion systems requiring ramps/bridges for a user to enter/exit the driving simulator. A user may enter the simulator through a building surface aperture between two of the linear guides.

### Method of Producing a Motion Generator

Motion generators, motion systems, and vehicle driving simulators in accordance with the invention can be produced by conventional methods of construction and manufacture. Frequently off-the-shelf components may be used in their production.

Whilst the invention has been described in particular in relation to the use of motion generators in vehicle motion simulation applications, the skilled addressee will appreciate that the motion generators and motion systems of the invention will find other applications such as flying vehicle simulation and in particular simulating rotorcraft. The skilled addressee will also appreciate that numerous modifications and alterations can be made to the above embodiments, which are given by way of example only, without departing from the scope of the invention as defined by the claims.

## Claims

1. A motion generator (10, 400, 600, 53) for moving a payload (30, 430, 630, 58) in three degrees of freedom above the surface (13, 413, 601), the motion generator (10, 400, 600, 53) comprising a rotatable platform (12, 412, 602) arranged for rotation on a circular guide (12/14; 612/614) above the surface (13, 413, 601), at least three linear guides (103, 203, 303; 41LG, 42LG, 43LG; 604LG, 606LG, 608LG, 610LG) extending ray-wise above the surface (13, 413, 601) from a centre (C), each linear guide (103, 203, 303; 41LG, 42LG, 43LG; 604LG, 606LG, 608LG, 610L G) having a linear guide carriage (102, 202, 302; 41LGC, 42LGC, 43LGC, 44LGC, 604GC, 606GC, 608GC, 610GC) moveable thereon, a peripheral guide carriage (104, 204, 304; 41PGC, 42PGC, 43PGC, 44PGC) mounted for rotation on each linear guide carriage (102, 202, 302; 41LGC, 42LGC, 43LGC, 44LGC, 604GC, 606GC, 608GC, 610GC) about the periphery of the rotatable platform (12,412, 602) via a circular track including two circular rails (612, 614) at the base of the rotatable platform, a circular magnet way (615) is arranged at the base of the rotatable platform between the two circular rails, and a plurality of actuators (101, 201, 301; 604LM, 606LM, 608LM, 610LM), whereby at least one actuator (101, 201, 301; 604LM, 606LM, 608LM, 610LM) may be operated to exert a force between a peripheral guide carriage (104, 204, 304; 41PGC, 42PGC, 43PGC, 44PGC) and the rotatable platform (12, 412, 602) to rotate the platform (12, 412, 602) and in which the rotatable platform (12, 412, 602) may also be translated above the surface (13, 413, 601) by the operation of at least one actuator (101, 201, 301; 604LM, 606LM, 608LM, 610LM).

2. A motion generator (10, 400, 600, 53) according to claim 1, in which at least one of the actuators (101, 201, 301; 604LM, 606LM, 608LM, 610LM), preferably all of the actuators, comprises a linear motor (101) and/or in which at least one actuator (101, 201, 301; 604LM, 606LM, 608LM, 610LM) comprises a belt drive (41BD, 42BD, 43BD, 44BD).

3. A motion generator (10, 400, 600, 53) according to any preceding claim, in which one of the peripheral guide carriages and the rotatable platform (12, 412, 602) includes at least one linear motor coil (24) which interacts with a corresponding linear motor magnet way (26, 615) on the other of the peripheral guide carriages (104, 204, 304; 41PGC, 42PGC, 43PGC, 44PGC) and the rotatable platform (12, 412, 602) to rotate the platform (12, 412, 602).

4. A motion generator (10, 400, 600, 53) according to the preceding claim in which the peripheral guide carriage (104, 204, 304; 41PGC, 42PGC, 43PGC, 44PGC) comprises the linear motor coil(s) (24) and the rotatable platform (12, 412, 602) comprises the corresponding linear motor magnet way (26, 615).

5. A motion generator (10, 400, 600, 53) according to claim 2 or either of claims 3 or 4, in which there are four linear guides (103, 203, 303; 41LG, 42LG, 43LG; 604LG, 606LG, 608LG, 610LG) extending ray-wise at right angles above the surface (13, 413, 601) from the centre (C), the four linear guides being respectively comprised in four actuator assemblies (604, 606, 608, 610) which respectively include the actuators having linear motors (604LM, 606LM, 608LM, 610LM)..

6. A motion generator (10, 400, 600, 53) according to any preceding claim, in which movement of two adjacent linear guide carriages (102, 202, 302; 41LGC, 42LGC, 43LGC, 44LGC, 604GC, 606GC, 608GC, 610GC) along their respective linear guides (103, 203, 303; 41LG, 42LG, 43LG; 604LG, 606LG, 608LG, 610LG) towards the centre (C) moves the rotatable platform (12, 412, 602) above the surface (13, 413, 601) away from the centre.

7. A motion generator (10, 400, 600, 53) according to any preceding claim, in which movement of two adjacent linear guide carriages (102, 202, 302; 41LGC, 42LGC, 43LGC, 44LGC, 604GC, 606GC, 608GC, 610GC) along their respective linear guides (103, 203, 303; 41LG, 42LG, 43LG; 604LG, 606LG, 608LG, 610LG) away from the centre moves the rotatable platform (12, 412, 602) above the surface (13, 413, 601) towards the centre (C).

8. A motion generator (10, 400, 600, 53) according to any preceding claim, in which the rotatable platform (12, 412, 602) can rotate by up to, or more than, 360 degrees.

9. A motion system (52) including a motion generator (10, 400, 600, 53) according to any preceding claim and a control system (57, 701) arranged to control operation of the motion generator (10, 400, 600, 53).

10. A combination comprising a first motion generator (10, 400, 600, 53) according to any one of claims 1 to 8 or a motion system (52) according to claim 9 as a primary motion generator/motion system with a secondary motion generator (630) on the rotatable platform (12, 412, 602) of the first motion generator (10, 400, 600, 53).

11. A combination according to claim 10, in which the secondary motion generator (630) is a 3, 4, 5 or 6 degrees of freedom motion generator.

12. A vehicle driving simulator (50) including a motion generator (10, 400, 600, 53) according to any one of claims 1 to 8, or a motion system (52) according to claim 9 or a combination according to claim 10 or 11 and including at least one environment simulation means selected from visual projection or display means (56), and audio means (59).

13. A vehicle driving simulator (50) according to claim 12, in which the projection or display means (56) extends completely around the rotatable platform (12, 412, 602).

14. A vehicle driving simulator (50) according to claim 12 or 13 in which the projection and or display means (56) is mounted about the rotatable platform (12, 412, 602), preferably for movement linked to the platform (12, 412, 602).

15. A method of producing a motion generator (10, 400, 600) according to any one of claims 1 to 8, the method comprising providing: a rotatable platform (12, 412, 602) arranged for rotation on a circular guide (12/14; 612/614) above the surface (13, 413, 601), arranging at least three linear guides (103, 203, 303; 41LG, 42LG, 43LG; 604LG, 606LG, 608LG, 610LG) to extend ray-wise above the surface (13, 413, 601) from a centre (C), providing each linear guide (103, 203, 303; 41LG, 42LG, 43LG; 604LG, 606LG, 608LG, 610LG) with a linear guide carriage (102, 202, 302; 41LGC, 42LGC, 43LGC, 44LGC, 604GC, 606GC, 608GC, 610GC) moveable thereon, a peripheral guide carriage (104, 204, 304; 41PGC, 42PGC, 43PGC, 44PGC) pivotally mounted on each linear guide carriage (102, 202, 302; 41LGC, 42LGC, 43LGC, 44LGC, 604GC, 606GC, 608GC, 610GC) about the periphery of the rotatable platform (12, 412, 602) to rotate the platform (12, 412, 602) via a circular track including two circular rails (612, 614) at the base of the rotatable platform and a circular magnet way (615) arranged at the base of the rotatable platform between the two circular rails, and in which the rotatable platform (12, 412, 602) may also be translated above the surface (13, 413, 601) by the operation of at least one actuator, and a plurality of actuators (101, 201, 301; 604LM, 606LM, 608LM, 610LM), whereby, in use, each actuator (101, 201, 301; 604LM, 606LM, 608LM, 610LM) may be operated to exert a force between a peripheral guide carriage (104, 204, 304; 41PGC, 42PGC, 43PGC, 44PGC) on the circular guide (12/14; 612/614) and the rotatable platform (12,412, 602).

## Patentansprüche

1. Bewegungsgenerator (10, 400, 600, 53) zum Bewegen einer Nutzlast (30, 430, 630, 58) in drei Freiheitsgraden oberhalb der Oberfläche (13, 413, 601), wobei der Bewegungsgenerator (10, 400, 600, 53) eine drehbare Plattform (12, 412, 602) umfasst, die drehbar an einer kreisförmigen Führung (12/14; 612/614) oberhalb der Oberfläche (13, 413, 601) angeordnet ist, mindestens drei Linearführungen (103, 203, 303; 41LG, 42LG, 43LG; 604LG, 606LG, 608LG, 610LG), die sich strahlenförmig von einer Mitte (C) aus oberhalb der Oberfläche (13, 413, 601) erstrecken, wobei jede Linearführung (103, 203, 303; 41LG, 42LG, 43LG; 604LG, 606LG, 608LG, 610L G) einen Linearführungsschlitten (102, 202, 302; 41LGC), 42LGC, 43LGC, 44LGC, 604GC, 606GC, 608GC, 610GC) aufweist, der darauf beweglich ist, einen umlaufenden Führungsschlitten (104, 204, 304; 41PGC, 42PGC, 43PGC, 44PGC), der drehbar an jedem Linearführungsschlitten (102, 202, 302; 41LGC, 42LGC, 43LGC, 44LGC, 604GC, 606GC, 608GC, 610GC) um den Umfang der drehbahren Plattform (12, 412, 602) über eine kreisförmige Bahn, die zwei kreisförmige Schienen (612, 614) einschließt, an dem Fuß der drehbaren Plattform montiert ist, wobei eine kreisförmige Magnetbahn (615) an dem Fuß der drehbaren Plattform zwischen den beiden kreisförmigen Schienen und einer Vielzahl von Stellantrieben (101, 201, 301; 604LM, 606LM, 608LM, 610LM) angeordnet ist, wobei mindestens ein Stellantrieb (101, 201, 301; 604LM, 606LM, 608LM, 610LM) betätigt werden kann, um eine Kraft zwischen einem umlaufenden Führungsschlitten (104, 204, 304; 41PGC, 42PGC, 43PGC, 44PGC) und der drehbaren Plattform (12, 412, 602) auszuüben, um die Plattform (12, 412, 602) zu drehen, und wobei die drehbare Plattform (12, 412, 602) auch oberhalb der Oberfläche (13, 413, 601) durch die Betätigung mindestens eines Stellantriebs (101, 201, 301; 604LM, 606LM, 608LM, 610LM) verschoben werden kann.

2. Bewegungsgenerator (10, 400, 600, 53) nach Anspruch 1, wobei mindestens einer der Stellantriebe (101, 201, 301; 604LM, 606LM, 608LM, 610LM), vorzugsweise alle Stellantriebe, einen Linearmotor (101) umfasst und/oder wobei mindestens ein Stellantrieb (101, 201, 301; 604LM, 606LM, 608LM, 610LM) einen Riemenantrieb (41BD, 42BD, 43BD, 44BD) umfasst.

3. Bewegungsgenerator (10, 400, 600, 53) nach einem der vorhergehenden Ansprüche, wobei einer der umlaufenden Führungsschlitten und die drehbare Plattform (12, 412, 602) mindestens eine Linearmotorspule (24) einschließt, die mit einer entsprechenden Linearmotormagnetbahn (26, 615) an dem anderen der umlaufenden Führungsschlitten (104, 204, 304; 41PGC, 42PGC, 43PGC, 44PGC) und der drehbaren Plattform (12, 412, 602) zusammenwirken, um die Plattform (12, 412, 602) zu drehen.

4. Bewegungsgenerator (10, 400, 600, 53) nach dem vorhergehenden Anspruch, wobei der umlaufende Führungsschlitten (104, 204, 304; 41PGC, 42PGC, 43PGC, 44PGC) die Linearmotorspule(n) (24) umfasst und die drehbare Plattform (12, 412, 602) die entsprechende Linearmotormagnetbahn (26, 615) umfasst.

5. Bewegungsgenerator (10, 400, 600, 53) nach Anspruch 2 oder einem der Ansprüche 3 oder 4, wobei sich vier Linearführungen (103, 203, 303; 41LG, 42LG, 43LG; 604LG, 606LG, 608LG, 610LG) strahlenförmig rechtwinklig oberhalb der Oberfläche (13, 413, 601) von der Mitte (C) aus erstrecken, wobei die vier Linearführungen jeweils aus vier Stellantriebbaugruppen (604, 606, 608, 610) bestehen, die jeweils die Stellantriebe mit Linearmotoren (604LM, 606LM, 608LM, 610LM) einschließen.

6. Bewegungsgenerator (10, 400, 600, 53) nach einem der vorhergehenden Ansprüche, wobei die Bewegung von zwei benachbarten Linearführungsschlitten (102, 202, 302; 41LGC, 42LGC, 43LGC, 44LGC, 604GC, 606GC, 608GC, 610GC) entlang ihrer jeweiligen Linearführungen (103, 203, 303; 41LG, 42LG, 43LG; 604LG, 606LG, 608LG, 610LG) in Richtung der Mitte (C) die drehbare Plattform (12, 412, 602) oberhalb der Oberfläche (13, 413, 601) von der Mitte weg bewegt.

7. Bewegungsgenerator (10, 400, 600, 53) nach einem der vorhergehenden Ansprüche, wobei die Bewegung von zwei benachbarten Linearführungsschlitten (102, 202, 302; 41LGC, 42LGC, 43LGC, 44LGC, 604GC, 606GC, 608GC, 610GC) entlang ihrer jeweiligen Linearführungen (103, 203, 303; 41LG), 42LG, 43LG; 604LG, 606LG, 608LG, 610LG) von der Mitte weg die drehbare Plattform (12, 412, 602) oberhalb der Oberfläche (13, 413, 601) in Richtung der Mitte (C) bewegt.

8. Bewegungsgenerator (10, 400, 600, 53) nach einem der vorhergehenden Ansprüche, wobei sich die drehbare Plattform (12, 412, 602) um bis zu oder mehr als 360 Grad drehen kann.

9. Bewegungssystem (52), das einen Bewegungsgenerator (10, 400, 600, 53) nach einem der vorhergehenden Ansprüche und ein Steuersystem (57, 701) einschließt, das dazu angeordnet ist, den Betrieb des Bewegungsgenerators (10, 400, 600, 53) zu steuern.

10. Kombination, umfassend einen ersten Bewegungsgenerator (10, 400, 600, 53) nach einem der Ansprüche 1 bis 8 oder ein Bewegungssystem (52) nach Anspruch 9 als primären/s Bewegungsgenerator/Bewegungssystem mit einem sekundären Bewegungsgenerator (630) auf der drehbaren Plattform (12, 412, 602) des ersten Bewegungsgenerators (10, 400, 600, 53).

11. Kombination nach Anspruch 10, wobei der sekundäre Bewegungsgenerator (630) ein Bewegungsgenerator mit 3, 4, 5 oder 6 Freiheitsgraden ist.

12. Fahrzeug-Fahrsimulator (50), der einen Bewegungsgenerator (10, 400, 600, 53) nach einem der Ansprüche 1 bis 8 oder ein Bewegungssystem (52) nach Anspruch 9 oder eine Kombination nach Anspruch 10 oder 11 einschließt und mindestens ein Umgebungssimulationsmittel einschließt, das aus einem visuellen Projektions- oder Anzeigemittel (56) und einem Audiomittel (59) ausgewählt ist.

13. Fahrzeug-Fahrsimulator (50) nach Anspruch 12, wobei sich das Projektions- oder Anzeigemittel (56) vollständig um die drehbare Plattform (12, 412, 602) erstreckt.

14. Fahrzeug-Fahrsimulator (50) nach Anspruch 12 oder 13, wobei das Projektions- und/oder Anzeigemittel (56) um die drehbare Plattform (12, 412, 602) herum montiert ist, vorzugsweise für eine mit der Plattform (12, 412, 602) verbundene Bewegung.

15. Verfahren zum Herstellen eines Bewegungsgenerators (10, 400, 600) nach einem der Ansprüche 1 bis 8, wobei das Verfahren das Bereitstellen von Folgendem umfasst: einer drehbaren Plattform (12, 412, 602), die drehbar an einer kreisförmigen Führung (12/14; 612/614) oberhalb der Oberfläche (13, 413, 601) angeordnet ist, Anordnen von mindestens drei Linearführungen (103, 203, 303; 41LG, 42LG, 43LG; 604LG, 606LG, 608LG, 610LG), um sich strahlenförmig oberhalb der Oberfläche (13, 413, 601) von einer Mitte (C) aus zu erstrecken, Bereitstellen jeder Linearführung (103, 203, 303; 41LG, 42LG, 43LG; 604LG, 606LG, 608LG, 610LG) mit einem Linearführungsschlitten (102, 202, 302; 41LGC, 42LGC, 43LGC, 44LGC, 604GC, 606GC, 608GC, 610GC), der daran beweglich ist, eines umlaufenden Führungsschlittens (104, 204, 304; 41PGC, 42PGC, 43PGC, 44PGC), der an jedem Linearführungsschlitten (102, 202, 302; 41LGC, 42LGC, 43LGC, 44LGC, 604GC, 606GC, 608GC, 610GC) über den Umfang der drehbaren Plattform (12, 412, 602) schwenkbar montiert ist, um die Plattform (12, 412, 602) über eine kreisförmige Bahn, die zwei kreisförmige Schienen (612, 614) einschließt, an dem Fuß der drehbaren Plattform zu drehen, und einer kreisförmigen Magnetbahn (615), die an dem Fuß der drehbaren Plattform zwischen den beiden kreisförmigen Schienen angeordnet ist, und wobei die drehbare Plattform (12, 412, 602) auch oberhalb der Oberfläche (13, 413, 601) durch die Betätigung mindestens eines Stellantriebs verschoben werden kann, und einer Vielzahl von Stellantrieben (101, 201, 301; 604LM, 606LM, 608LM, 610LM), wobei, im Einsatz, jeder Stellantrieb (101, 201, 301; 604LM, 606LM, 608LM, 610LM) betätigt werden kann, um eine Kraft zwischen einem umlaufenden Führungsschlitten (104, 204, 304; 41PGC, 42PGC, 43PGC, 44PGC) an der kreisförmigen Führung (12/14; 612/614) und der drehbaren Plattform (12,412, 602) auszuüben.

## Revendications

1. Générateur de mouvement (10, 400, 600, 53) permettant de déplacer une charge utile (30, 430, 630, 58) dans trois degrés de liberté au-dessus de la surface (13, 413, 601), le générateur de mouvement (10, 400, 600, 53) comprenant une plateforme rotative (12, 412, 602) agencée pour tourner sur un guide circulaire (12/14 ; 612/614) au-dessus de la surface (13, 413, 601), au moins trois guides linéaires (103, 203, 303 ; 41LG, 42LG, 43LG ; 604LG, 606LG, 608LG, 610LG) s'étendant radialement au-dessus de la surface (13, 413, 601) à partir d'un centre (C), chaque guide linéaire (103, 203, 303 ; 41LG, 42LG, 43LG ; 604LG, 606LG, 608LG, 610LG) ayant un chariot de guidage linéaire (102, 202, 302 ; 41LGC, 42LGC, 43LGC, 44LGC, 604GC, 606GC, 608GC, 610GC) mobile sur celui-ci, un chariot de guidage périphérique (104, 204, 304 ; 41PGC, 42PGC, 43PGC, 44PGC) monté pour tourner sur chaque chariot de guidage linéaire (102, 202, 302 ; 41LGC, 42LGC, 43LGC, 44LGC, 604GC, 606GC, 608GC, 610GC) autour de la périphérie de la plateforme rotative (12, 412, 602) par l'intermédiaire d'un rail circulaire comprenant deux rails circulaires (612, 614) à la base de la plateforme rotative, un chemin magnétique circulaire (615) est agencé à la base de la plateforme rotative entre les deux rails circulaires, et une pluralité d'actionneurs (101, 201, 301 ; 604LM, 606LM, 608LM, 610LM), moyennant quoi au moins un actionneur (101, 201, 301 ; 604LM, 606LM, 608LM, 610LM) peut être actionné pour exercer une force entre un chariot de guidage périphérique (104, 204, 304 ; 41PGC, 42PGC, 43PGC, 44PGC) et la plateforme rotative (12, 412, 602) pour faire tourner la plateforme (12, 412, 602) et où la plateforme rotative (12, 412, 602) peut également être translatée au-dessus de la surface (13, 413, 601) par l'actionnement d'au moins un actionneur (101, 201, 301 ; 604LM, 606LM, 608LM, 610LM).

2. Générateur de mouvement (10, 400, 600, 53) selon la revendication 1, dans lequel au moins l'un des actionneurs (101, 201, 301 ; 604LM, 606LM, 608LM, 610LM), de préférence tous les actionneurs, comprend un moteur linéaire (101) et/ou dans lequel au moins un actionneur (101, 201, 301 ; 604LM, 606LM, 608LM, 610LM) comprend un entraînement par courroie (41BD, 42BD, 43BD, 44BD).

3. Générateur de mouvement (10, 400, 600, 53) selon l'une quelconque des revendications précédentes, dans lequel l'un parmi les chariots de guidage périphériques et la plateforme rotative (12, 412, 602) comprend au moins une bobine de moteur linéaire (24) qui interagit avec un chemin magnétique de moteur linéaire correspondant (26, 615) sur l'autre parmi les chariots de guidage périphériques (104, 204, 304 ; 41PGC, 42PGC, 43PGC, 44PGC) et la plateforme rotative (12, 412, 602) pour faire tourner la plateforme (12, 412, 602).

4. Générateur de mouvement (10, 400, 600, 53) selon la revendication précédente dans lequel le chariot de guidage périphérique (104, 204, 304 ; 41PGC, 42PGC, 43PGC, 44PGC) comprend la ou les bobines de moteur linéaire (24) et la plateforme rotative (12, 412, 602) comprend le chemin magnétique de moteur linéaire correspondant (26, 615).

5. Générateur de mouvement (10, 400, 600, 53) selon la revendication 2 ou l'une quelconque des revendications 3 ou 4, dans lequel il y a quatre guides linéaires (103, 203, 303 ; 41LG, 42LG, 43LG ; 604LG, 606LG, 608LG, 610LG) s'étendant radialement à angles droits au-dessus de la surface (13, 413, 601) à partir du centre (C), les quatre guides linéaires étant respectivement compris dans quatre ensembles d'actionneurs (604, 606, 608, 610) qui comprennent respectivement les actionneurs ayant des moteurs linéaires (604LM, 606LM, 608LM, 610LM).

6. Générateur de mouvement (10, 400, 600, 53) selon l'une quelconque des revendications précédentes, dans lequel le mouvement de deux chariots de guidage linéaire (102, 202, 302 ; 41LGC, 42LGC, 43LGC, 44LGC, 604GC, 606GC, 608GC, 610GC) adjacents le long de leurs guides linéaires (103, 203, 303 ; 41LG, 42LG, 43LG ; 604LG, 606LG, 608LG, 610LG) respectifs vers le centre (C) déplace la plateforme rotative (12, 412, 602) au-dessus de la surface (13, 413, 601) pour l'éloigner du centre.

7. Générateur de mouvement (10, 400, 600, 53) selon l'une quelconque des revendications précédentes, dans lequel le mouvement de deux chariots de guidage linéaire (102, 202, 302 ; 41LGC, 42LGC, 43LGC, 44LGC, 604GC, 606GC, 608GC, 610GC) adjacents le long de leurs guides linéaires (103, 203, 303 ; 41LG, 42LG, 43LG ; 604LG, 606LG, 608LG, 610LG) respectifs pour s'éloigner du centre déplace la plateforme rotative (12, 412, 602) au-dessus de la surface (13, 413, 601) vers le centre (C).

8. Générateur de mouvement (10, 400, 600, 53) selon l'une quelconque des revendications précédentes, dans lequel la plateforme rotative (12, 412, 602) peut tourner selon 360 degrés ou plus.

9. Système de mouvement (52) comprenant un générateur de mouvement (10, 400, 600, 53) selon l'une quelconque des revendications précédentes et un système de commande (57, 701) agencé pour commander le fonctionnement du générateur de mouvement (10, 400, 600, 53).

10. Combinaison comprenant un premier générateur de mouvement (10, 400, 600, 53) selon l'une quelconque des revendications 1 à 8 ou un système de mouvement (52) selon la revendication 9 en tant que générateur de mouvement/système de mouvement primaire avec un générateur de mouvement secondaire (630) sur la plateforme rotative (12, 412, 602) du premier générateur de mouvement (10, 400, 600, 53) .

11. Combinaison selon la revendication 10, dans laquelle le générateur de mouvement secondaire (630) est un générateur de mouvement à 3, 4, 5 ou 6 degrés de liberté.

12. Simulateur de conduite de véhicule (50) comprenant un générateur de mouvement (10, 400, 600, 53) selon l'une quelconque des revendications 1 à 8, ou un système de mouvement (52) selon la revendication 9 ou une combinaison selon la revendication 10 ou 11, et comprenant au moins un moyen de simulation d'environnement choisi parmi des moyens de projection visuelle ou d'affichage (56), et des moyens audio (59).

13. Simulateur de conduite de véhicule (50) selon la revendication 12, dans lequel le moyen de projection ou d'affichage (56) s'étend entièrement autour de la plateforme rotative (12, 412, 602).

14. Simulateur de conduite de véhicule (50) selon la revendication 12 ou 13 dans lequel le moyen de projection et/ou d'affichage (56) est monté autour de la plateforme rotative (12, 412, 602), de préférence pour un mouvement lié à la plateforme (12, 412, 602).

15. Procédé de production d'un générateur de mouvement (10, 400, 600) selon l'une quelconque des revendications 1 à 8, le procédé comprenant la fourniture : d'une plateforme rotative (12, 412, 602) agencée pour tourner sur un guide circulaire (12/14 ; 612/614) au-dessus de la surface (13, 413, 601), l'agencement d'au moins trois guides linéaires (103, 203, 303 ; 41LG, 42LG, 43LG ; 604LG, 606LG, 608LG, 610LG) pour s'étendre radialement au-dessus de la surface (13, 413, 601) à partir d'un centre (C), la fourniture pour chaque guide linéaire (103, 203, 303 ; 41LG, 42LG, 43LG ; 604LG, 606LG, 608LG, 610LG) d'un chariot de guidage linéaire (102, 202, 302 ; 41LGC, 42LGC, 43LGC, 44LGC, 604GC, 606GC, 608GC, 610GC) mobile sur celui-ci, d'un chariot de guidage périphérique (104, 204, 304 ; 41PGC, 42PGC, 43PGC, 44PGC) monté sur pivot sur chaque chariot de guidage linéaire (102, 202, 302 ; 41LGC, 42LGC, 43LGC, 44LGC, 604GC, 606GC, 608GC, 610GC) autour de la périphérie de la plateforme rotative (12, 412, 602) pour faire tourner la plateforme (12, 412, 602) par l'intermédiaire d'un rail circulaire comprenant deux rails circulaires (612, 614) à la base de la plateforme rotative et un chemin magnétique circulaire (615) agencé à la base de la plateforme rotative entre les deux rails circulaires, et où la plateforme rotative (12, 412, 602) peut également être translatée au-dessus de la surface (13, 413, 601) par le fonctionnement d'au moins un actionneur, et d'une pluralité d'actionneurs (101, 201, 301 ; 604LM, 606LM, 608LM, 610LM), où, lors de l'utilisation, chaque actionneur (101, 201, 301 ; 604LM, 606LM, 608LM, 610LM) peut être actionné pour exercer une force entre un chariot de guidage périphérique (104, 204, 304 ; 41PGC, 42PGC, 43PGC, 44PGC) sur le guide circulaire (12/14 ; 612/614) et la plateforme rotative (12, 412, 602).
